(19) **Europäisches Patentamt / European Patent Office / Office européen des brevets**

(11) **EP 4 648 463 A1**

(12) # EUROPEAN PATENT APPLICATION

(43) Date of publication:
**12.11.2025 Bulletin 2025/46**

(21) Application number: **25174793.7**

(22) Date of filing: **07.05.2025**

(51) International Patent Classification (IPC):
*H04W 24/02* (2009.01)   *H04W 28/16* (2009.01)
*H04W 88/08* (2009.01)   *H04W 88/12* (2009.01)
*H04W 88/18* (2009.01)   *H04L 41/0894* (2022.01)

(52) Cooperative Patent Classification (CPC):
**H04W 24/02; H04L 41/0894; H04L 41/16;
H04L 41/5019;** H04L 41/046; H04L 41/5009;
H04L 43/08; H04W 28/16; H04W 88/085;
H04W 88/12; H04W 88/18

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **09.05.2024  IN 202411036663
02.05.2025  US 202519197460**

(71) Applicant: **Mavenir Systems, Inc.
Richardson, TX 75081 (US)**

(72) Inventor: **TANEJA, Mukesh
Bangalore (IN)**

(74) Representative: **Dompatent
Partnerschaft von Patent- und Rechtsanwälten
mbB
Deichmannhaus am Dom
Bahnhofsvorplatz 1
50667 Köln (DE)**

(54) **OPTIMIZING RADIO RESOURCE MANAGEMENT IN O-RAN NETWORKS USING MACHINE LEARNING TECHNIQUES**

(57) A system and method for dynamically determining optimal values of various radio resource management (RRM) parameters used for RRM to meet various performance objectives such that RRM parameters are selected and dynamically adapted using a Radio Resource Management - MultiObjective (RRM-MO) optimization module adapted to optimize and dynamically adjust the RRM parameters.

FIG. 19

**Description**

BACKGROUND

1. Field of the Disclosure

The present disclosure is related to Open Radio Access Network (O-RAN) wireless networks and relates more particularly to machine-learning-assisted Radio Resource Management (RRM) policies in O-RAN Networks to meet various performance objectives.

2. Description of Related Art

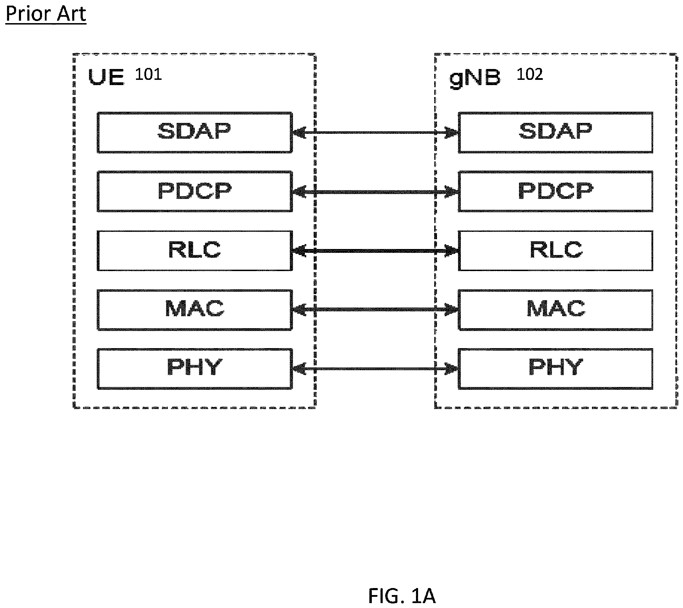

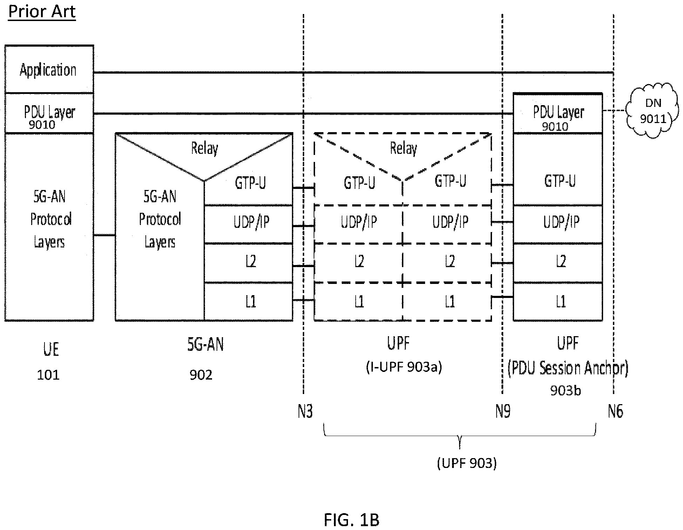

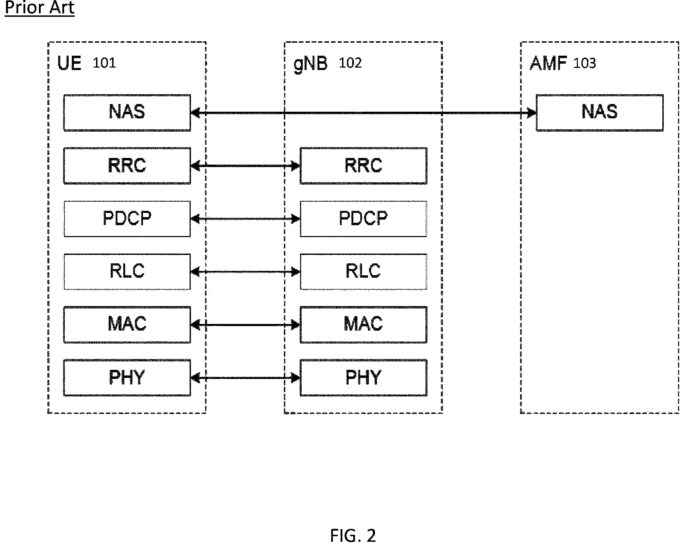

In the following sections, an overview of Next Generation Radio Access Network (NG-RAN) architecture and 5G New Radio (NR) stacks is discussed. 5G NR user and control plane functions with monolithic gNodeB (gNB) are shown in FIGS. 1A, 1B and 2. For the user plane (shown in FIG. 1A), physical (PHY), Media Access Control (MAC), Radio Link Control (RLC), Packet Data Convergence Protocol (PDCP) and Service Data Adaptation Protocol (SDAP) sublayers originate in the UE 101 and are terminated in the gNB 102 on the network side.

FIG. 1B is a block diagram illustrating the user plane protocols stacks for a PDU session where PDU layer 9010 corresponds to the PDU carried between the UE 101 and the data network (DN) 9011 over the PDU session. UE 101 is connected to the 5G access network (AN) 902, which AN 902 is in turn connected via the N3 interface to the Intermediate User Plane Function (I-UPF) 903a portion of the UPF 903, which I-UPF 903a is in turn connected via the N9 interface to the PDU session anchor 903b portion of the UPF 903, and which PDU session anchor 903b is connected to the DN 9011. The PDU session can correspond to Internet Protocol version 4 (IPv4), IP version 6 (IPv6), or both types of IP packets, when the PDU session is of type IPv4, IPv6 or IPv4v6, respectively. General packet radio service Tunneling Protocol - User Plane (GTP-U) shown in FIG. 1B supports tunnelling user plane data over N3 and N9 interfaces and provides encapsulation of end user PDUs for N3 and N9 interfaces.

For the control plane shown in FIG. 2, RRC (Radio Resource Control), PDCP, RLC, MAC and PHY sublayers originate in the UE 101 and are terminated in the gNB 102 on the network side, and Non-Access Stratum (NAS) originates in the UE 101 and is terminated in the Access Mobility Function (AMF) 103 on the network side.

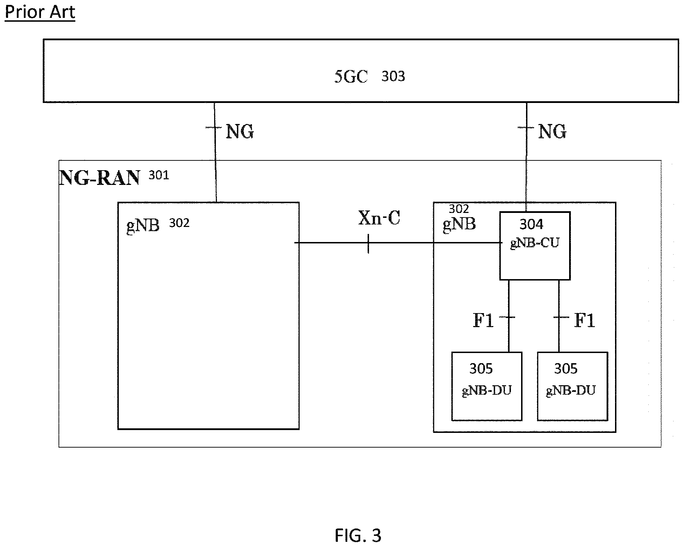

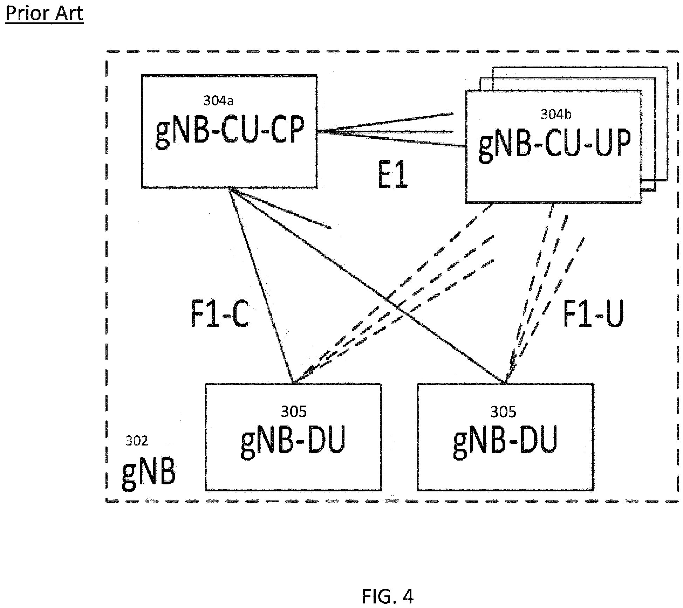

Next Generation-Radio Access Network (NG-RAN) architecture is shown in FIGS. 3 - 4. As shown in FIG. 3, the NG-RAN 301 comprises a set of gNBs 302 connected to the 5GC 303 through the NG interface. Each gNB comprises gNB-CU 304 and one or more gNB-DU 305 (see FIG. 3). FIG. 4 illustrates separation of Centralized Unit-Control Plane (CU-CP) and CU-User Plane (CU-UP). The E1 is the interface between gNB-CU-CP 304a and gNB-CU-UP 304b, F1-C is the interface between gNB-CU-CP 304a and gNB-DU 305, and F1-U is the interface between gNB-CU-UP 304b and gNB-DU 305. As shown in FIG. 4, gNB 302 may comprise a gNB-CU-CP 304a, multiple gNB-CU-UPs (or gNB-CU-UP instances) 304b and multiple gNB-DUs (or gNB-DU instances) 305. One gNB-DU 305 is connected to only one gNB-CU-CP 304a, and one gNB-CU-UP 304b is connected to only one gNB-CU-CP 304a.

In this section, an overview of Layer 2 (L2) of 5G New Radio (NR) will be provided in connection with FIGS. 5-7. FIG. 5 is a block diagram illustrating Downlink (DL) L2 structure, FIG. 6 is a block diagram illustrating Uplink (UL) L2 structure, and FIG. 7 is a block diagram illustrating L2 data flow example where H denotes headers or sub-headers. L2 of 5G NR is split into the following sublayers:

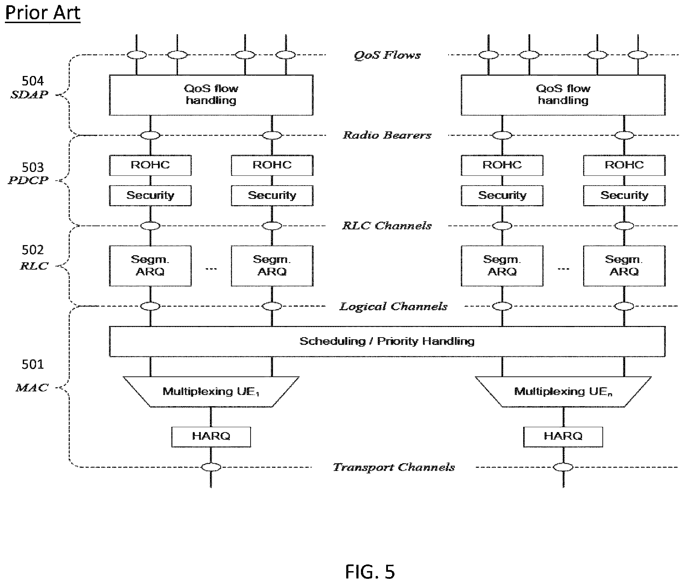

1) MAC 501 in FIGS. 5-7: Logical Channels (LCs) are Service Access Points (SAPs) between the MAC and RLC layers. This layer runs a MAC scheduler to schedule radio resources across different LCs (and their associated radio bearers). For the DL direction, the MAC layer processes and sends RLC PDUs received on LCs to the PHY layer as Transport Blocks (TBs). For the UL direction, it receives TBs from the PHY layer, processes these and sends them to the RLC layer using the LCs.

2) RLC 502 in FIGS. 5-7: The RLC sublayer presents RLC channels to the PDCP sublayer. The RLC sublayer supports three transmission modes: RLC-Transparent Mode (RLC-TM), RLC-Unacknowledged Mode (RLC-UM) and RLC-Acknowledgement Mode (RLC-AM). RLC configuration is per logical channel. It hosts Automatic Repeat Request (ARQ) protocol for RLC-AM mode.

3) PDCP 503 in FIGS. 5-7: The PDCP sublayer presents Radio Bearers (RBs) to the SDAP sublayer. There are two types of Radio Bearers: Data Radio Bearers (DRBs) for data and Signaling Radio Bearers (SRBs) for the control plane.

4) SDAP 504 in FIGS. 5-7: The SDAP maps Quality of Service (QoS) flows within a PDU session to a specific DRB.

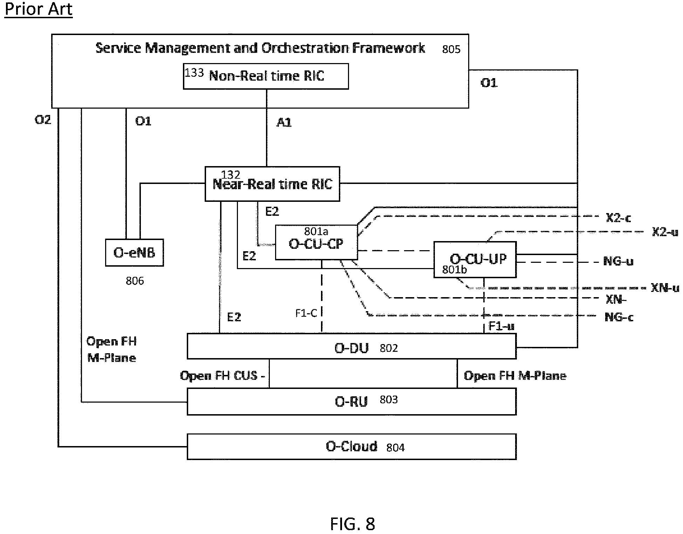

O-RAN is based on disaggregated components which are connected through open and standardized interfaces based on 3GPP NG-RAN. An overview of O-RAN with disaggregated RAN Centralized Unit (CU), Distributed Unit (DU), and Radio Unit (RU), near-real-time Radio Intelligent Controller (RIC) and non-real-time RIC is illustrated in FIG. 8.

As shown in FIG. 8, the CU (shown split as O-CU-CP 801a and O-CU-UP 801b) and the DU (shown as O-DU 802) are connected using the F1 interface (with F1-C for Control Plane (CP) and F1-U for User Plane (UP) traffic) over a mid-haul (MH) path. One DU can host multiple cells (e.g., one DU could host 24 cells) and each cell may support many users. For example, one cell may support 800 Radio Resource Control (RRC)-connected users and out of these 800, there may be for example, 250 Active users (i.e., users that have data to send at a given point of time).

A cell site can comprise multiple sectors, and each sector can support multiple cells. For example, one site could comprise three sectors and each sector could support eight cells (with each cell being on a different frequency band in a given sector). One CU-CP could support multiple DUs and thus multiple cells. For example, a CU-CP could support 500 cells and around 100,000 User Equipment (UE). Each UE could support multiple DRBs and there could be multiple instances of CU-UP to serve these DRBs. For example, each UE could support 4 DRBs, and 400,000 DRBs (corresponding to 100,000 UEs) may be served by five CU-UP instances (and one CU-CP instance).

The DU could be in a private data center, or it could be located at a cell site. The CU could also be in a private data center or even hosted on a public cloud system. The DU and CU are typically located at different physical locations. The CU communicates with a 5G core system, which could also be hosted in the same public cloud system (or could be hosted by a different cloud provider). A RU (shown as O-RU 803 in FIG. 8) is located at a cell-site and communicates with the DU via a Front Haul (FH) interface.

The E2 nodes (CU and DU) are connected to the near-real-time RIC 132 using the E2 interface. The E2 interface is used to send data (e.g., user and/or cell KPMs) from the RAN, and deploy control actions and policies to the RAN at near-real-time RIC 132. The applications or services at the near-real-time RIC 132 that deploys the control actions and policies to the RAN are called xApps. During the E2 setup procedures, the E2 node advertises the metrics it can expose, and an xApp in the near-RT RIC can send a subscription message specifying key performance metrics which are of interest. The near-real-time RIC 132 is connected to the non-real-time RIC 133 (which is shown as part of Service Management and Orchestration (SMO) Framework 805 in FIG. 8) using the A1 interface. The applications that are hosted at non-RT-RIC are called rApps. Also shown in FIG. 8 are O-eNB 806 (which is shown as being connected to the near-real-time RIC 132 and the SMO Framework 805) and O-Cloud 804 (which is shown as being connected to the SMO Framework 805).

In this section, PDU sessions, DRBs, and QoS flows will be discussed. In 5G networks, PDU connectivity service is a service that provides exchange of PDUs between a UE and a DN identified by a Data Network Name (DNN). The PDU Connecitivity service is supported via PDU sessions that are established upon request from the UE. The DNN defines the interface to a specific external data network. One or more QoS flows can be supported in a PDU session. All the packets belonging to a specific QoS flow have the same 5G QoS Identifier (5QI). A PDU session comprises the following: DRBs that are between UE and CU in RAN; and an NG-U GTP tunnel which is between CU and User Plane Function (UPF) in the core network.

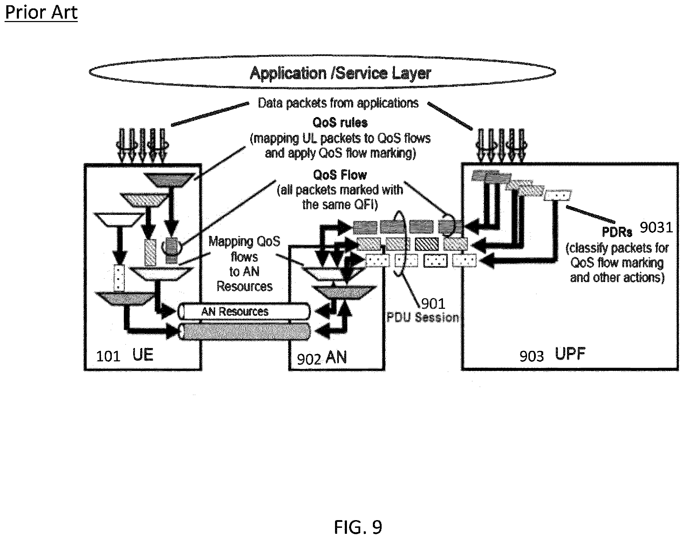

FIG. 9 illustrates an example PDU session comprising multiple DRBs, where each DRB may comprise multiple QoS flows. In FIG. 9, three components are shown for the PDU session 901, UE 101, AN 902, and UPF 903 that includes Packet Detection Rules (PDRs) 9031.

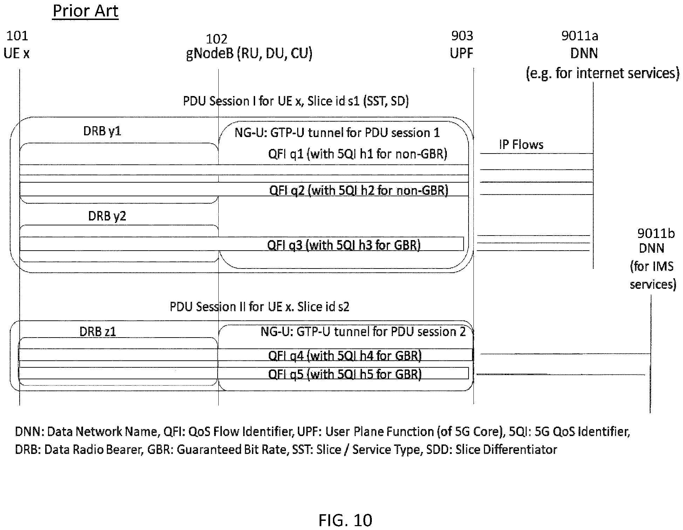

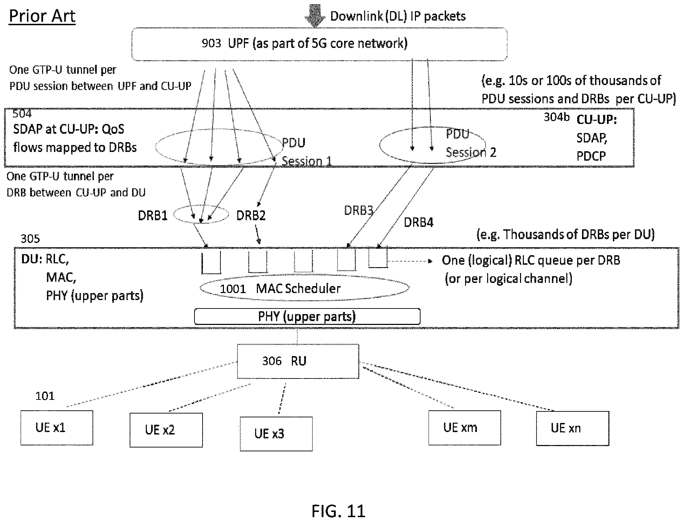

The following should be noted for 3GPP 5G network architecture illustrated in FIG. 10 (in the context of multiple PDU sessions involving multiple DRBs and QoS Flow Identifiers (QFIs), which PDU sessions are implemented involving UE 101, gNodeB 102, UPF 903, and DNNs 9011a and 9011b) and FIG. 11 (in the context of RRM for connecting UE 101 to the network via RU 306 with a MAC Scheduler 1001).

1) The transport connection between the base station (i.e., CU-UP 304b of FIG. 11) and the UPF 903 uses a single GTP-U tunnel per PDU session, as shown in FIGS. 10 and 11. The PDU session is identified using GTP-U Tunnel Endpoint Identifier (TEID).

2) The transport connection between the DU 305 and the CU-UP 304b of FIG. 11 uses a single GTP-U tunnel per DRB (see also FIG. 10 and FIG. 11). The DU is provided with an UL GTP-U TEID and the CU is provided with the corresponding DL GTP-U TEID to allow for data communication for that DRB between DU and CU-UP.

3) Service Adaptation Protocol (SDAP):

    a) The SDAP 504 Layer receives DL data from the UPF 903 across the NG-U interface (see FIG. 11).
    b) The SDAP 504 maps one or more QoS Flow(s) onto a specific DRB.
    c) The SDAP header is present between the UE 101 and the CU (when reflective QoS is enabled), and includes a field to identify the QoS flow within a specific PDU session.

4) GTP-U protocol includes a field to identify the QoS flow and is present between CU and UPF 903 (in the core network).

5) One (logical) DU (or RLC) queue exists per DRB (or per logical channel) for RLC PDUs that are to be transmitted for the first time, as shown in FIG. 11. Separate logical queues may exist in DU for packets that are to be retransmitted to UE.

One-to-one mapping of standardized 5QI values to 5G QoS characteristics is specified in **Table 1** shown below.

**Table 1**

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 1 | GBR (NOTE 1) | 20 | 100 ms (NOTE 11, NOTE 13) | $10^{-2}$ | N/A | 2000 ms | Conversational Voice |
| 2 | | 40 | 150 ms (NOTE 11, NOTE 13) | $10^{-3}$ | N/A | 2000 ms | Conversational Video (Live Streaming) |
| 3 | | 30 | 50 ms (NOTE 11, NOTE 13) | $10^{-3}$ | N/A | 2000 ms | Real Time Gaming, V2X messages (see TS 23.287 [121]). Electricity distribution - medium voltage, Process automation monitoring |
| 4 | | 50 | 300 ms (NOTE 11, NOTE 13) | $10^{-6}$ | N/A | 2000 ms | Non-Conversational Video (Buffered Streaming) |
| 65 (NOTE 9, NOTE 12) | | 7 | 75 ms (NOTE 7, NOTE 8) | $10^{-2}$ | N/A | 2000 ms | Mission Critical user plane Push To Talk voice (e.g., MCPTT) |
| 66 (NOTE 12) | | 20 | 100 ms (NOTE 10, NOTE 13) | $10^{-2}$ | N/A | 2000 ms | Non-Mission-Critical user plane Push To Talk voice |
| 67 (NOTE 12) | | 15 | 100 ms (NOTE 10, NOTE 13) | $10^{-3}$ | N/A | 2000 ms | Mission Critical Video user plane |
| 75 (NOTE 14) | | | | | | | |
| 71 | | 56 | 150 ms (NOTE 11, NOTE 13, NOTE 15) | $10^{-6}$ | N/A | 2000 ms | "Live" Uplink Streaming (e.g. TS 26.238 [76]) |

(continued)

| 5QI Value | Resource Type | Default Priority Level | Packet Delay Budget (NOTE 3) | Packet Error Rate | Default Maximum Data Burst Volume (NOTE 2) | Default Averaging Window | Example Services |
|---|---|---|---|---|---|---|---|
| 72 | | 56 | 300 ms (NOTE 11, NOTE 13, NOTE 15) | $10^{-4}$ | N/A | 2000 ms | "Live" Uplink Streaming (e.g. TS 26.238 [76]) |
| 73 | | 56 | 300 ms (NOTE 11, NOTE 13, NOTE 15) | $10^{-8}$ | N/A | 2000 ms | "Live" Uplink Streaming (e.g. TS 26.238 [76]) |
| 74 | | 56 | 500 ms (NOTE 11, NOTE 15) | $10^{-8}$ | N/A | 2000 ms | "Live" Uplink Streaming (e.g. TS 26.239 [76]) |
| 76 | | 56 | 500 ms (NOTE 11, NOTE 13, NOTE 15) | $10^{-4}$ | N/A | 2000 ms | "Live" Uplink Streaming (e.g. TS 26.238 [76]) |
| 5 | Non-GBR (NOTE 1) | 10 | 100 ms NOTE 10, NOTE 13) | $10^{-6}$ | N/A | N/A | IMS Signalling |
| 6 | | 60 | 300 ms (NOTE 10, NOTE 13) | $10^{-6}$ | N/A | N/A | Video (Buffered Streaming) TCP-based (e.g., www, e-mail, chat, ftp, p2p file sharing, progressive video, etc.) |
| 7 | | 70 | 100 ms (NOTE 10, NOTE 13) | $10^{-3}$ | N/A | N/A | Voice, Video (Live Streaming) Interactive Gaming |

The first column represents the 5QI value. The second column lists the different resource types, i.e., as one of Non-Guaranteed Bit Rate (Non-GBR), GBR, Delay-critical GBR. The third column ("Default Priority Level") represents the priority level Priority 5QI, for which lower the value the higher the priority of the corresponding QoS flow. The fourth column represents the Packet Delay Budget (PDB), which defines an upper bound for the time that a packet may be delayed between the UE and the N6 termination point at the UPF. The fifth column represents the Packet Error Rate (PER). The sixth column represents the maximimum data burst volume for delay-critical GBR types. The seventh column represents averaging window for GBR, delay critical GBR types. Note that only a subset of 5QI values are shown in Table 1 below.

For example, as shown in Table 1, 5QI value 1 is of resource type GBR with the default priority value of 20, PDB of 100ms, PER of 0.01, and averaging widnow of 2000 ms. Conversational voice falls under this catogery. Similarly, as shown in Table 1, 5QI value 7 is of resource type Non-GBR with the default priority value of 70, PDB of 100ms and PER of 0.001. Voice, video (live streaming), and interactive gaming fall under this catogery.

In this section, RRM will be discussed (a block diagram for an example RRM with a MAC Scheduler is shown in FIG. 11). L2 methods (such as MAC scheduler) play a critical role in allocating radio resources to different UEs in a cellular network. For example, the scheduling priority of a logical channel ($P_{LC}$) could be determined as part of MAC scheduler using one of the following:

$$P_{LC} = W_{5QI}*P_{5QI} + W_{GBR}*P_{GBR} + W_{PDB}*P_{PDB} + W_{PF}*P_{PF} + W_{BO}*P_{BO},$$

or

$$P_{LC} = (W_{5QI}*P_{5QI} + W_{PF}*P_{PF}) * \text{maximum}(W_{GBR}*P_{GBR}, W_{PDB}*P_{PDB}) + W_{BO}*P_{BO},$$

or

$$P_{LC} = (W_{5QI}*P_{5QI} + W_{PF}*P_{PF}) + \text{maximum}(W_{GBR}*P_{GBR}, W_{PDB}*P_{PDB}) + W_{BO}*P_{BO}$$

Once one of the above methods is used to compute scheduling priority of a logical channel corresponding to a UE in a cell, the same method is used for all other UEs and these scheduling priorities are used to determine the resources to be allocated to each Logical Channel (LC) in each cell.

In the above expressions, the parameters are defined as follows:

a) $P_{5QI}$ is the priority metric corresponding to the QoS class (5QI) of the LC. Incoming traffic from a DRB is mapped to LC at RLC level. $P_{5QI}$ is a function of the default 5QI priority value, $Priority_{5QI}$, of a QoS flow that is mapped to the current LC. The lower the value of $Priority_{5QI}$, the higher the priority of the corresponding QoS flow. For example, Voice over New Radio (VoNR) (with 5QI of 1) will have a higher $P_{5QI}$ compared to web browsing (with 5QI of 9).

b) $P_{GBR}$ is the priority metric corresponding to the target bit rate of the corresponding logical channel. The GBR metric $P_{GBR}$ represents the fraction of data that must be delivered to the UE within the time left in the current averaging window $T_{avg\_win}$ (as per 5QI table, default is 2000 msec.) to meet the UE's GBR requirement. $P_{GBR}$ is calculated as follows:

$$P_{GBR} = remData/targetData$$

Where, *targetData* is the total data bits to be served in each averaging window $T_{avg\_win}$ in order to meet the GFBR (Guaranteed Flow Bit Rate) of the given QoS flow; *remData* is the amount of data bits remaining to be served within the time left in the current averaging window; $P_{GBR}$ is reset to 1 (or some other suitable value) at the start of each averaging window $T_{avg\_win}$, and should go down to 0 towards the end of this window if the GBR criterion is met; and $P_{GBR} = 0$ for non-GBR flows.

c) $P_{PDB}$ is the priority metric corresponding to the packet delay budget at DU for the corresponding logical channel.

$$P_{PDB} = 1 \text{ if } PDB^{DU} <= QDelay_{RLC},$$

and

$$P_{PDB} = 1/(PDB^{DU} - QDelay_{RLC}) \text{ if } PDB^{DU} > QDelay_{RLC}$$

where both Packet Delay Budget at DU ($PDB^{DU}$) and RLC Queuing delay ($QDelay_{RLC}$) are measured in terms of slots.

$$QDelay_{RLC} = (t - T_{RLC})$$

is the delay of the oldest RLC packet in the QoS flow that has not been scheduled yet, and it is calculated as the difference in time between the SDU insertion in RLC queue to current time where t = current time instant, $T_{RLC}$ = time instant when oldest SDU was inserted in RLC.

d) $P_{PF}$ is the priority metric corresponding to proportional fair metric of the UE. $P_{PF}$ is the PF Metric, calculated on a per UE basis as

$$P_{PF} = \frac{r^{\alpha}}{R_{avg}^{\beta}}$$

where r is the UE's achievable data rate and the DU considers Channel Status Information (CSI) that includes Channel Quality Indication (CQI) reported by UE to compute this; $R_{avg} = a.R_{avg} + (1-a).b$ , UE's average throughput, where b>=0 is the number of bits scheduled in a current Transmission Time Interval (TTI) and 0 < a <= 1 is the IIR filter coefficient; and $\alpha$ and $\beta$ are configurable parameters. Choosing different values of $\alpha$ and $\beta$ help achieve different types of fairness behavior. These are referred to as fairness coefficients for the proportonal fair metric here and these influence fairness of the RRM policy. For example, if one sets $\alpha = 1$ and $\beta = 0$, the priority metric, $P_{PF}$, works in a greedy way and favors UEs in good channel conditions. This helps to improve cell throughput but need not be fair to individual logical channels and some of these LCs may not meet their QoS requirements. If $\alpha = 0$ and $\beta = 1$, the PF metric picks up and serves users in roundrobin order. For some existing systems, $\alpha$ and $\beta$ are set equal to 1 as part of proportional fair metric (or between 0 and 1). Suitable value of ($\alpha$ and $\beta$) need to be chosen as per fairness needed from the RRM policy e). Buffer Occupancy (BO) is for the RLC queue (e.g., at DU for downlink traffic). $P_{BO}$ is the normalized value of BO across all DRBs.

f) In addition, the following weights are defined:

$W_{5QI}$ is the weight of $P_{5QI}$;

$W_{GBR}$ is the weight of $P_{GBR}$;

$W_{PDB}$ is the weight of $P_{PDB}$;

$W_{PF}$ is the weight of $P_{PF}$; and

$W_{BO}$ is the weight of $P_{BO}$.

For example, each of the above weights could be set to a value between 0 and 1 though other suitable set of values could also be selected.

In this section, an interference management method, Coordinated Multipoint Transmission (CoMP), is discussed. With some of the typical DL CoMP methods, sub-band Channel Quality Information (CQI) is provided from the UE to the DU (at the base station). For this, the DL channel bandwidth (BW) is logically segmented into multiple sub-bands and CQI information for each of these sub-bands is provided from the UE to the base station. For cell k with channel bandwidth cbw(k), sub-bands(k) denote the number of sub-bands being used to get CQI in cell k at a given point of time. This CQI information across various sub-bands is used by the DL CoMP methods (at the base station) to manage utilization (and allocation) of resource blocks (i.e., PRBs) over a given time interval in each cell and this is done in a way that can help reduce interference among cells in the same DU and across neighboring DUs. Having a higher number of sub-bands gives more flexibility to the CoMP methods but it also increases overhead in the system. On the other hand, getting CQI from the lower number of sub-bands helps to keep the overhead lower, but gives less flexibility to the CoMP methods to meet different performance goals. As part of CoMP, transmission may be blanked in certain bands in each cell where there are some UEs which are experiencing interference from neighboring cells. An optimal number of sub-bands to use in each cell can also vary depending on the condition in the network. Finding the right number of sub-bands (to use for getting CQI) for each cell k at any given time is an important parameter here.

Network slicing will now be discussed. A network slice is a logical network that provides specific network capabilities and network characteristics, supporting various service properties for network slice customers. A network slice divides a PHY network infrastructure into multiple virtual networks, each with its own (dedicated or shared) resources and service level agreements. A Single Network Slice Selection Assistance Information (S-NSSAI) identifies a network slice in 5G systems. S-NSSAI is comprises: i) a Slice/Service type (SST), which refers to the expected Network Slice behavior in terms of features and services; and ii) a Slice Differentiator (SD), which is optional information that complements the Slice/Service type(s) to differentiate amongst multiple Network Slices of the same Slice/Service type.

SST has an 8-bit field, and it may have standardized and/or non-standardized values between 0 and 255. The range of 0 to 127 corresponds to standardized SST range, and the range of 128 to 255 corresponds to operator specific range. 3GPP has standardized some SSTs, e.g., SSTs for enhanced mobile broadband (eMBB), ultra-reliable low latency communication (URLLC) and Massive Internet of Things (MIoT) slices.

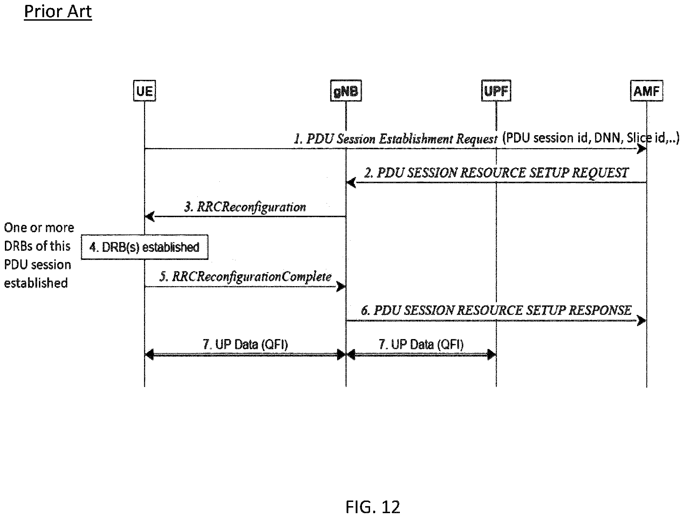

UE first registers with a 5G cellular network identified by its Public Land Mobile Network Identifier (PLMN ID). UE knows which S-NSSAIs are allowed in each registration area. It then establishes a PDU session associated with a given S-NSSAI in that network towards a target Data Network (DN), such as the internet. As in FIG. 10, one or more QoS flows could be activated within this PDU session. UE can perform data transfer using a network slice for a given data network using that PDU session. A high-level view of UE establishing a PDU session with a specific DNN is shown in FIG. 12. An NSSAI is a collection of S-NSSAIs. A Network Slice Instance (NSI) comprises a set of network function instances and the required resources that are deployed to serve the traffic associated with one or more S-NSSAIs.

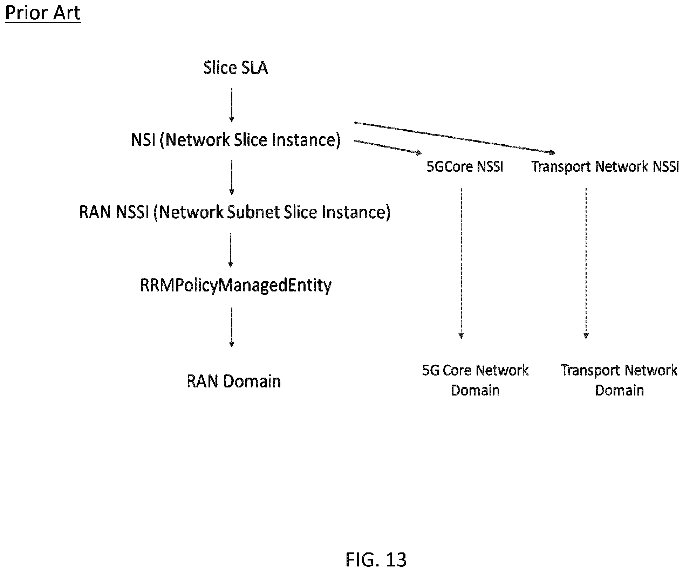

Information model definitions, referred to as Network Resource Model (NRM), are provided for the characterization of network slices. Management representation of a network slice is realized with Information Object Classes (IOCs), named NetworkSlice and NetworkSliceSubnet, as specified in 5G Network Resource Model (NRM). The NetworkSlice IOC and the NetworkSliceSubnet IOC represent the properties of a Network Slice Instance (NSI) and a Network Slice Subnet Instance (NSSI), respectively. As shown in FIG. 13, NSI could be composed of a single NSSI (such as RAN NSSI) or multiple NSSIs (such as RAN NSSI, 5G Core NSSI and Transport Network NSSI).

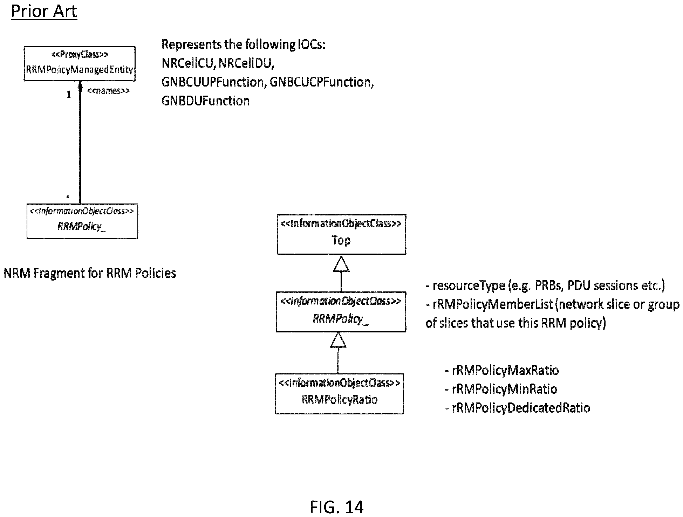

Service profile comprises attributes defined to encode the network-slice-related requirements supported by the NSI. Examples of some attributes in the service profile include: aggregate DL throughput of a given network slice, per-UE average throughput in the given network slice, and UE density in a given coverage area. FIG. 14 is a simplified view of the classes and attributes of 5G Network Resource Model (NRM) for resource allocation to slices, which classes and attributes are explained below.

1) The RRMPolicyManagedEntity proxy class represents the following IOCs on which RRM policies can be applied: NR Cell resources managed at CU, NR cell resources managed at DU, CU-UP function, CU-CP function, and DU function.

2) The RRMPolicy _IOC defines two attributes:

a) resourceType attribute (such as PRBs, Number of PDU sessions, Number of RRC connected users, number of UEs, number of DRBs etc.).

i) The following are standardized: PRB: Ratio of total PRBs available for allocation (in DU); RRC Connected Users: Ratio of total number of users within the cell (in CU-CP); and DRB: Ratio of total number of DRBs (in CU-UP).

ii) Other vendor-defined resources can be used (such as number of DRBs, number of UEs, etc.).

b) rRMPolicyMemberList attribute: Associated network slice or group of slices for which this policy is defined.

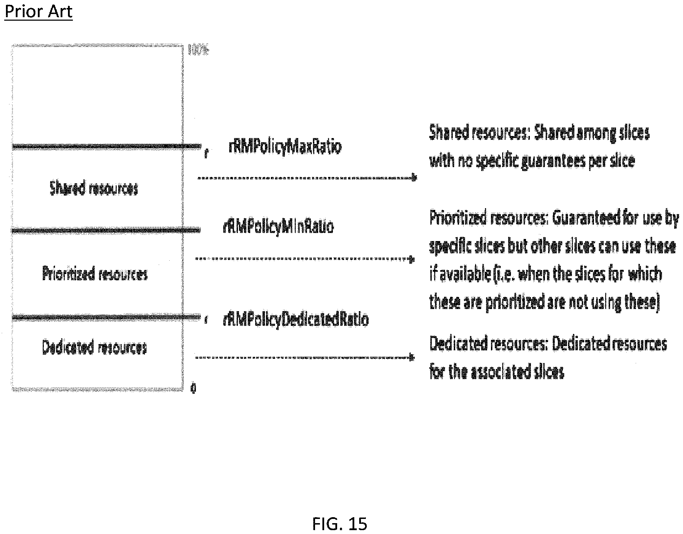

3) The RRMPolicyRatio IOC provides a resource model for distribution of resources among slices. Additional details are provided below, in connection with FIG. 15, which shows the structure of RRMPolicyRatio. Three resource categories have been defined in connection with RRMPolicyRatio: Category I; Category II; and Category III.

Category I: The attribute ***rRMPolicyDedicatedRatio*** defines the dedicated resource usage quota for the rRMPolicyMemberList, including dedicated resources. The sum of the *rRMPolicyDedicatedRatio* values assigned to all RRMPolicyRatio(s) name-contained by the same MangedEntity shall be less or equal to 100. Dedicated resources refer to the resources which are dedicated for use by the associated rRMPolicyMemberList. These resources cannot be shared even if the associated rRMPolicyMember does not use them. The Dedicated resources quota is represented by rRMPolicyDedicatedRatio.

Category II: The attribute ***rRMPolicyMinRatio*** defines the minimum resource usage quota for the associated rRMPolicyMemberList, including at least one of prioritized resources and dedicated resources, i.e., *rRMPolicyMinRatio* defines the resources quota that needs to be guaranteed for use by the associated rRMPolicyMemberList. For the same resource type, the sum of the *rRMPolicyMinRatio* values assigned to all RRMPolicyRatio(s) name-contained by same MangedEntity shall be less or equal 100. Prioritized resources refer to the resources which are preferentially used by the associated rRMPolicyMemberList. These resources are guaranteed for use by the associated rRMPolicyMemberList when it needs to be used. When not used, these resources may be used by other rRMPolicyMemberList(s) (i.e., the rRMPolicyMemberList(s) defined in RRMPolicyRatio(s) name-contained by the same ManagedEntity). The prioritized resources quota is represented by [*rRMPolicyMinRatio* minus *rRMPolicyDedicatedRatio*].

Category III: The attribute ***rRMPolicyMaxRatio*** defines the maximum resource usage quota for the associated rRMPolicyMemberList, including at least one of shared resources, prioritized resources and dedicated resources. For the same resource type, the sum of the *rRMPolicyMaxRatio* values assigned to all RRMPolicyRatio(s) name-contained by the same MangedEntity can be greater than 100. Shared resources refer to the resources that are shared with other rRMPolicyMemberList(s) (i.e., the rRMPolicyMemberList(s) defined in RRMPolicyRatio(s) name-contained by the same ManagedEntity). The shared resources are not guaranteed for use by the associated rRMPolicyMemberList. The shared resources quota is represented by [*rRMPolicyMaxRatio* minus *rRMPolicyMinRatio*].

An example scenario involving the following two slices in a cell is provided:

RRM Policy Instance 1:

$$S\text{-}NSSAI = x1 \text{ (for slice 1)},$$

*rRMPolicyDedicatedRatio: 5%*
*rRMPolicyMinRatio: 15%*
*rRMPolicyMaxRatio: 75%*

RRM Policy Instance 2:

$$S\text{-}NSSAI = x2 \text{ (for slice 2)}$$

*rRMPolicyDedicatedRatio: 8%*
*rRMPolicyMinRatio: 20%*
*rRMPolicyMaxRatio: 85%*

For the slice with S-NSSAI x1, dedicated pool of RBs is 5%, and prioritized pool of RBs is 10%. For the slice with S-NSSAI x2, dedicated pool of RBs is 8%, and prioritized pool of RBs is 12% in the example above.

For a logical channel belonging to a slice z, slice-aware scheduling priority metric, $P_{LC,Z}$, is computed using one of the following:

$$P_{LC,Z} = (W_{5QI}{*}P_{5QI} + W_{PF}{*}P_{PF} + W_{BO}{*}P_{BO} + W_Z * P_Z + W_Z^d * P_Z^d) * \text{maximum } (W_{GBR}{*}P_{GBR},$$

$$W_{PDB}{*}\ P_{PDB}),$$

or

$$P_{LC,Z} = W_{5QI}{*}P_{5QI} + W_{PF}{*}P_{PF} + W_{BO}{*}P_{BO} + W_Z * P_Z + W_Z^d * P_Z^d + W_{GBR}{*}P_{GBR} + W_{PDB}{*}$$

$$P_{PDB},$$

In the above, slice priority metric for slice z, $P_Z$, is given as ($\frac{remSliceData}{reqSliceData}$), and $W_Z$ is the weight of $P_Z$. Here, *reqSliceData* is the required data to be served for that slice over a given time interval and *remSliceData* is the remaining data which needs to be served for that slice over the same time interval. Note that *remSliceData* for a slice is set to zero if the required amount of data for that slice has been already served over the time interval which is used for evaluation of the slice-level Key Performance Indicator (KPI). Also, $P_Z$, for a slice is set to 0 if there is no data to be served for that slice during a given time interval which is used for evaluating slice-level KPI.

For $P_Z^d$, *numDRBsDelaySensitive* is the number of delay sensitive DRBs (such as VoNR, video conferencing, and the like) in slice z for which (strict) delay constraints need to be met and *numDRBsDelayViolations(s)* is the number of DRBs for which delay constraints are not being met. Also, $W_Z^d$ is the weight of $P_Z^d$ that can have a value between 0 and 1 (or can have value over other suitable range).

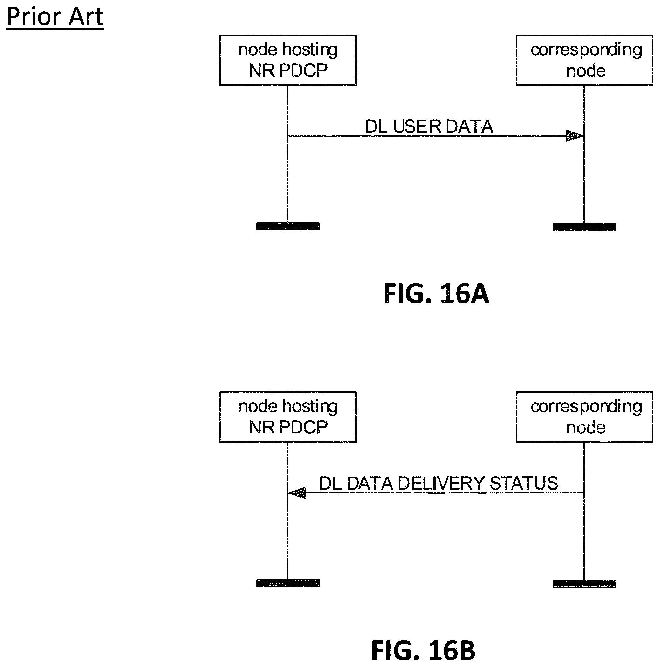

The F1-U interface supports NR UP protocol that provides support for flow control and reliability between CU-UP and DU for each DRB. FIGS. 16A and 16B show DL Data, and Flow Control Feedback in 5G Networks. As in FIG. 16A, Downlink User Data (DUD) PDUs are used to carry PDCP PDUs from CU-UP to DU for each DRB. As in FIG. 16B, the Downlink Data Delivery Status (DDDS) message conveys Desired Buffer Size (DBS), Desired Data Rate (DDR) and some other parameters from DU to CU-UP for each DRB as part of flow control feedback.

In this section, a general overview of Reinforcement Learning (RL) will be provided. RL is a feedback-based Machine Learning (ML) technique where an agent learns to behave in an environment by performing actions and seeing the results of the actions. For each good action, the agent gets positive feedback or a reward and for each bad action, the agent gets negative feedback or a penalty. The goal of the agent is to use RL algorithms to learn the best policy as it interacts with the environment so that, given any state, it will always take the optimal action to produce the least cost (or the maximum reward) in the long run.

Some of the terms used in connection with reinforcement learning technique are listed below:

Agent(): An entity that interacts with the environment and acts upon it.

Environment(): A situation in which an agent is present or surrounded by (In RL, a stochastic environment is assumed, which means it is random in nature).

Action(): The moves taken by an agent within the environment.

State(): A situation returned by the environment after each action taken by the agent.

Cost(): Feedback returned to the agent from the environment to evaluate the action.

Policy(): A strategy applied by the agent for the next action based on the current state.

Value(): An expected long-term cost with a discount factor.

Q-value(): Similar to Value(), but takes an additional parameter as the current action 'a'.

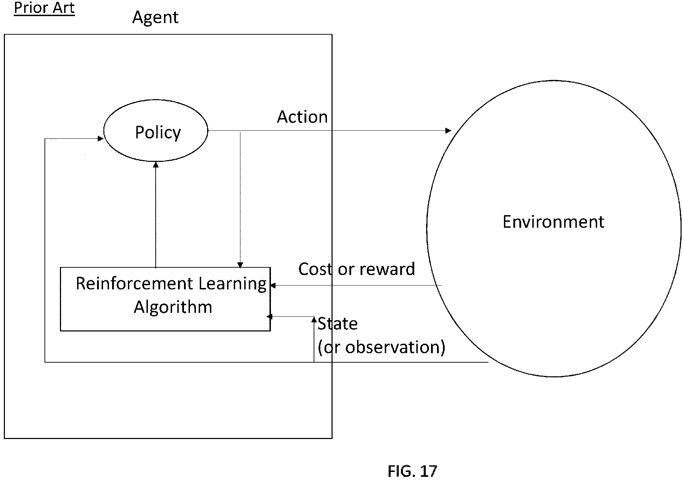

Markov Decision Process (MDP) is used to formalize RL problems. If the environment is completely observable, then its dynamics can be modelled as a MDP. In a MDP, illustrated in FIG. 17, the agent constantly interacts with the environment and performs actions. At each action, the environment generates a new state and responds with a reward (or penalty). MDP contains four elements as follows: States, Actions, Costs (or Rewards), and Transition Probabilities. A MDP is finite when there are a finite number of states, finite costs, and finite number of actions. A set of notations to represent each of the elements in an MDP includes:

S: A set of finite States S

A: A set of finite Actions A

C(s, a): Immediate cost (or expected immediate cost) incurred after transitioning from state s to state s', due to action 'a'.

P: represents the Transition probability matrix corresponds to state space S and action space A.

P(s'|s, a): Transition Probability of landing in state s' when action 'a' is taken at state s.

Approaches used in RL such as Value-based approach (Value iteration methods), Q-learning, Deep Q Neural Network (DQN), and Policy-based approach (Policy iteration methods) are discussed. The value-based approach is about finding the optimal value function that is the optimal value at a state under any policy $\pi$. The below system of equations for the state space are called Bellman equations or optimality equations and these characterize the values and the optimal policies in infinite-horizon models:

$$V(s) = \min_{a}\{C(s, a) + \gamma \sum_{s'} P(s'|s, a)V(s')\}$$

where, V(s): Value at state s, C(s,a): Immediate cost at state s for action a, $\gamma$: Discount factor, P(s'|s,a): transition probability of landing in state s' when action a is taken at state s, and V(s'): Value at state s'.

Q-learning involves learning the value function Q (s, a), which characterizes the benefit of taking an action "a" at a particular state "s". The main objective of Q-learning is to learn the policy that can inform the agent what actions should be taken to minimize the overall cost. The goal of the agent in Q-learning is to optimize the value of Q where the value of Q-learning can be derived from the Bellman equation. Instead of using a value at each state, we use Q-value, Q(s,a), for a pair of state and action. Q-value specifies which action is more beneficial than the other actions and according to the best Q-value, the agent takes its next move.

After performing an action "a", the agent will incur a cost C(s, a), and the agent will end up at a certain state. Q-value equation is:

$$Q(s,a) = C(s,a) + \gamma \sum_{s'} (P(s'|s,a)min_a[Q(s',a)])$$

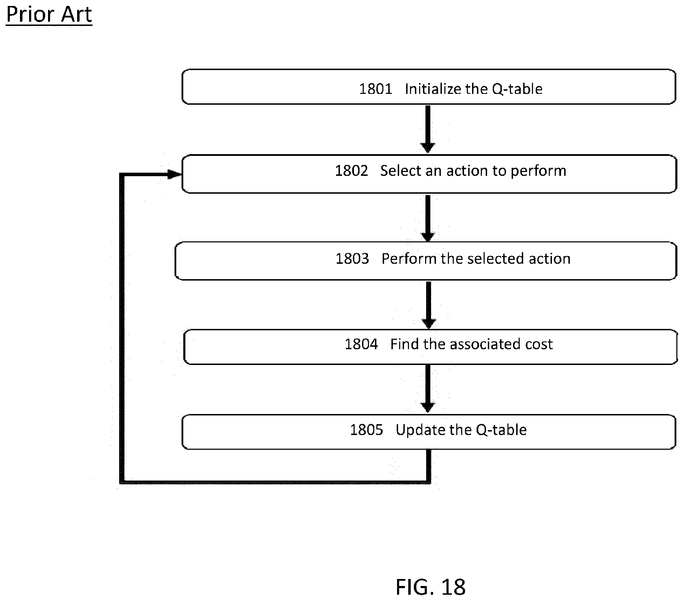

The flowchart shown in FIG. 18 illustrates the workings of Q-learning. In block 1801, the Q-table is initialized. In block 1802, an action to perform is selected. In block 1803, the selected action is performed. In block 1804, the associated cost for the action is found. In block 1805, the Q-table is updated.

Deep Q Neural Network (DQN) is a Q-learning system using Neural networks. For a big state space environment, it will be a challenging and complex task to define and update a Q-table. To solve such an issue, we can use a DQN algorithm. In this approach, instead of defining a Q-table, neural network approximates the Q-values for each action and state.

A policy-based approach is used to find the optimal policy for the minimum future cost without using the value function. This approach involves two types of policies: 1) Deterministic policy where the same action is produced by the policy for any given state, and 2) Stochastic policy where for each state there is a (probability) distribution over set of actions possible at that state.

Some of the Key Performance Indicators (KPIs) or performance goals specified by an operator in each O-RAN network could include the following:

An operator indicates to maximize per-cell throughput for each cell k, *cellT(k),* to the extent possible.

An operator could provide targets for per-cell throughput for a given scenario p in cell k.

1) A UE distribution scenario is first defined. Assume there are u(k, p) UEs in the cell k in scenario p, which have active data sessions at a given point of time. A scenario p comprises UE identities of these u(k, p) UEs in cell k, Reference Signal Receive Power (RSRP) reported by these UEs and identity of active DRBs being supported by these UEs (along with 5QI information for these DRBs). A location of each UE could also be optionally included. In another variant of this scenario, each UE is associated with a zone depending on the RSRP reported by this UE and this zone information is also included in the scenario. For example, each UE could be categorized into a cell-center (for UEs which are experiencing very good radio conditions), cell-mid (for UEs experiencing moderate radio conditions) or cell-edge (for edge UE experiencing poor radio conditions) zone depending on the RSRP reported by that UE. The number of such (radio) zones, r, can vary (e.g., three or higher). Scenario p could contain n1(p) % of cell-center UEs, n2(p) % of cell-mid UEs and remaining (100 - n1(p) - n2(p)) % cell-edge UEs in poor radio conditions for the case where three zones are used in that cell.

2) An operator could provide minimum average cell throughput, cellScenarioMinThro(k,p) for scenario p in cell k based on its own requirements and could do this for a certain number of UE distribution scenarios. It is also possible that the operator already has deployed base stations from one vendor and is looking to select another base station vendor for its networks. This operator may want the new base station vendor to provide cell throughput at the same or higher rate than what the existing vendor is providing, and this operator could select some scenarios for this purpose. Each such scenario may have the same or different number of UE in different radio conditions in that cell.

3) Note that there could be multiple cells belonging to the same frequency band at that same DU and at near-by DUs. Interference management methods, such as Coordinated Multipoint Transmission (CoMP), are used to mitigate impact of interference across cells corresponding to the same frequency band. An operator may want to keep the average cell throughput for cell k when interference coordination methods are also activated, to be at least $\mu(k,p)$ *theor_peakT(k), for a given scenario p while meeting diverse performance requirements for each DRB, each UE and each slice in that cell. Here, the fraction $\mu(k,p)$ is between 0 and 1, and theor_peakT(k) is the best case theoretical peak throughput of the cell k . In this case, cellScenarioMinThro(k,p) is equal to $\mu(k,p)$*theor_peakT(k). Alternatively, the operator may specify targets for cellScenarioMinThro(k,p) based on its own requirements as discussed earlier.

An operator could specify that the average throughput, ueObservedThro(k, *r, h),* for each UE h in (radio) zone r in cell k, ue(k, r, h), to be above a certain minimum target, denoted as ueMinThro(k, r). The operator could specify these UE specific minimum targets depending on whether UE is in poor radio conditions (e.g. at the edge of the cell), moderate radio conditions (e.g. in cell-mid zone) or in a very good radio conditions (e.g. in cell-center zone) and in that case the minimum required throughout for any UE h in (radio) zone r in cell k is denoted as ueMinThro(k, r).

An operator could specify a target for cell level QoS KPI for each cell k, *cellQoSMinPerf(k),* considering QoS (or performance) constraints for each DRB in that cell. An operator may want to specify a minimum fraction (or percentage) of QoS flows, denoted as *cellQoS5QIMinPerf(k,j),* belonging to 5QI j for which QoS requirements should be met in the cell k. For example, an operator may want QoS requirements for at least 99% of the DRBs for 5QI 1 (VoNR), for at least 95% of the DRBs for 5QI 7 (e.g., live streaming) and for at least 97% of DRBs for 5QI 9 (e.g., video streaming) should be met in each cell k. In this case, cellQoSMinPerf(k) is given as cellQoS5QIMinPerf(k, 1)= 0.99, cellQoS5QIMinPerf(k,7)= 0.95 and cellQoS5QIMinPerf(k,9)=0.97 for cell k. Note this KPI is not necesarily dependent on the scenario type as the operator may want these performance requirements to be met for all types of deployment scenarios in that cell.

Slice related KPI for cell k considering all slices supported in that cell could also be specified by the operator. An operator may want to specify the minimum fraction (or percentage) of slices, denoted as cellSliceMinPerf(k), for which performance requirements should be met in each cell k. For example, performance requirements for a slice could include minimum throughput for that slice, minimum number of DRBs to be supported in that slice, and minimum percentage of DRBs corresponding to that slice for which QoS requirements should be met. If a given cell supports Ns slices, an operator could say that performance requirements of at least 90% of these slices should be met over a given time interval. In this case, cellSliceMinPerf(k)=0.9 (or 90%) for slice-level KPI for cell k. Note this KPI is not necesarily dependent on the scenario type as the operator may want these performance requirements to be met for all types of deployment scenarios in that cell.

Traffic mix to be supported for scenario p in cell k. A minimum number of DRBs for QoS class j (i.e., 5QI j for 5G networks) that an operator wants to support for scenario p in cell k is denoted as trafficMix5QIMin(k, p, j). For example, an operator may want to support at least 100 DRBs for 5QI 1 and at least 400 DRBs for 5QI 9 for scenario p in the cell k (i.e., when there are enough users available who want to run applications with these 5QIs in that cell). In this case, trafficMixMin(k, p) is given as trafficMix5QIMin(k, p, 1)=100 and trafficMix5QIMin(k, p, 9)=400 for cell k.

A total number of DRBs to be supported in a cell may also be specified. This is denoted as numDRBsMin(k) for cell k and can be valid for all types of UE deployment scenarios.

KPIs discussed above may be impacted due to various methods including: a MAC scheduler hosted at a DU that allocates resources to different DRBs (or associated LCs), a slice-aware scheduler that allocates radio resources to different slices and the associated DRBs, and CU-DU flow control and interference coordination methods that help control allocation of radio resources across cells supporting same frequency band. Some of these methods work to achieve contrasting objectives. For example, setting $\alpha$=1 and $\beta$ = 0, makes the priority metric, $P_{PF}$, work in a 'greedy' way where it favors UEs in good channel conditions and this can help to improve cell throughput but it can result in violation of QoS requirements of several DRBs and violation of performance requirements of some slices in that cell. Similarly, one could choose radio resource management methods and the associated parameters in a way that helps to meet slice level throughput goals but this may result in delay violation for some delay sensitive DRBs and may not help to achieve per-DRB KPIs in the associated cell. Also, one could start with an initial configuration of these methods that may help to meet KPIs in the initial period but may not help to meet KPIs as the cell-load increases or as the radio conditions degrade for several UEs.

Thus it is important to dynamically choose and adapt parameters used for these radio resource management methods in a way which helps to meet overall KPIs. Some such example parameters are listed here.

For the MAC scheduler which allocates resources to different LCs (or DRBs), some of these parameters include $W_{5QI}$, $W_{GBR}$, $W_{PDB}$, $W_{PF}$, $\alpha$ and $\beta$, as discussed earlier. For Frequency Selective Scheduling (FSS) and the DL CoMP, the number of sub-bands to use at a given time for sub-band CQI reports, i.e., sub-bands(k) for cell k, is one such parameter. Also, the number of sub-bands where transmssion may be blanked in the cell as part of DL CoMP, denoted as sub-bands-blank(k) for cell k. For a LC which is associated with a slice, there is an additional parameter, $W_z$, for slice z as discussed for slice-aware scheduler earlier.

It is important to choose the right value of these parameters for DRB level scheduler, and slice-aware scheduler and dynamically adapt these to meet various KPIs in changing conditions in a given O-RAN network.

SUMMARY

Accordingly, there is a need for an enhanced system and method to dynamically find the optimal values of various parameters used for RRM to meet various performance objectives discussed above, thereby enabling more efficient RRM methods. These methods need to deal with vast amounts of data and it is very difficult to find good values for these parameters or to dynamically adapt these with conventional techniques.

Accordingly, what is desired is a system and method to achieve more efficient RRM by utilizing machine-learning-based methods to help find correct values of various parameters used by these methods to meet various performance objectives.

Using the framework described above, an operator can specify some or all of the performance goals as listed below:

1) Give indication to maximize throughput for cell k, cellT(k), to whatever extent possible.
2) Minimum cell throughput for scenario p in cell k, cellScenarioMinThro(k, p). For example, cellScenarioMinThro(k,p) to be equal to $\mu(k,p)$*theor_peakT(k) as discussed earlier

3) Minimum cell throughput in cell k (for any given scenario), cellMinThro(k). For example, cellMinThro(k) to be equal to v(k)*theor_peakT(k) for cell k.

4) Minimum spectrum efficiency for scenario p in cell k. It is denoted as cellScenarioMinSpectrumEfficiency(k, p).

5) Minimum (average) UE throughput for any UE in zone r in cell k, ueMinThro(k, r).

6) Cell level QoS KPI,

$$cellQoSMinPerf(k) = \{cellQoS5QIMinPef(k,j) \text{ for desired values of 5QI j}\},$$

indicating the fraction (or percentage) of DRBs for which QoS constraints should be met, taking into account the QoS classes of these DRBs in the cell k.

7) Traffic mix to be supported for scenario p in that cell k,

$$trafficMix(k,p) = \{trafficMix5QI(k,j,p) \text{ for certain values of 5QI j}\}$$

indicating number of DRBs that should be allowed to communicate data in the cell for various classes for scenario p in cell k (for the cases when there are enough number of users requesting data communication for these QoS classes in that cell).

8) Slice level KPI,

*cellSliceMinPerf (k)*

indicating minimum fraction (or percentage) of slices in cell k for which slice performance goals should be met.

As discussed earlier, scheduling metric for a logical channel, LC, belonging to a slice z, is calculated as,

$$P_{LC,Z} = (W_{5QI}{}^*P_{5QI} + W_{PF}{}^*P_{PF} + W_Z * P_Z) * \text{maximum} (W_{GBR}{}^*P_{GBR}, W_{PDB}{}^* P_{PDB})$$

In the above, slice priority metric for slice z, $P_Z$, is given as $Pz = (\frac{remSliceData}{reqSliceData})$ , and $W_Z$ is the weight of $P_Z$. The above is ehanced to compute scheduling priority of a logical channel, LC, belonging to a slice z as follows:

$$P_{LC,Z} = (W_{5QI}{}^*P_{5QI} + W_{PF}{}^*P_{PF} + W_{BO}{}^*P_{BO} + W_Z * P_Z + W_Z^d * P_Z^d) * \text{maximum} (W_{GBR}{}^*P_{GBR}, W_{PDB}{}^* P_{PDB}),$$

or as

$$P_{LC,Z} = W_{5QI}{}^*P_{5QI} + W_{PF}{}^*P_{PF} + W_{BO}{}^*P_{BO} + W_Z * P_Z + W_Z^d * P_Z^d + W_{GBR}{}^*P_{GBR} + W_{PDB}{}^* P_{PDB},$$

In the above, the first slice priority metric for slice z, $P_Z$, is given as

$$Pz = (\frac{remSliceData}{reqSliceData})$$

where the second slice priority metric for slice z, denoted as $P_Z^d$ , is given as

$$P_Z^d = \left(\frac{numDRBsDelayViolations}{numDRBsDelaySensitive}\right)$$

Here, numDRBsDelaySensitive is the number of delay sensitive DRBs (such as VoNR, video conferencing, and the like) in slice z for which (strict) delay constraints must be met and numDRBsDelayViolations(s) is the number of DRBs for which delay constraints are not being met. $W_Z$ is the weight of $P_Z$ and $W_Z^d$ is the weight of $P_Z^d$ .

As discussed earlier, it becomes important to find the right values of the following parameters and dynamically adapt these to achieve performance goals (or KPIs) in the network: for the QoS scheduler as part of the MAC layer at the DU: $W_{5QI}$, $W_{GBR}$, $W_{PDB}$, $W_{PF}$, $W_{BO}$, $\alpha$ and $\beta$; for a DRB (or LC) which is associated with a slice z: $W_Z$, $W_Z^d$ ; for each slice: dedicated, prioritized and shared resources using rRMPolicyDedicatedRatio, rRMPolicyMinRatio, rRMPolicyMaxRatio; and for the DL CoMP: sub-bands(k) for cell k, and sub-bands-blank(k) for cell k.

In one configuration a system for optimizing and dynamically adjusting Radio Resource Management (RRM) parameters to achieve specified performance objectives according to an RRM policy is provided, the system comprising: a Centralized Unit (CU) coupled to a User Plane Function (UPF), the UPF associated with a gNodeB (gNB), a Distributed Unit (DU) coupled to the CU, an Radio Unit (RU) coupled to the DU, wherein at least one User Equipment (UE) is coupled to said RU, and a Radio Resource Management - MultiObjective (RRM-MO) optimization module adapted to optimize and dynamically adjust the RRM parameters. This system is provided such that the RRM-MO optimzation module is hosted as one of the following components selected from the group consisting of: a Radio Intelligent Controller (RIC) provided as a near-real time RIC server or a real time RIC server, the gNB, a 5G Network Data Analytics Function (NWDAF) server, or an Operations, Administration Maintenance (OAM) server.

The above-described and other features and advantages of the present disclosure will be appreciated and understood by those skilled in the art from the following detailed description, drawings, and appended claims.

DESCRIPTION OF THE DRAWINGS

FIG. 1A is a block diagram showing 5G NR user plane functions with monolithic gNB according to the prior art.

FIG. 1B is a block diagram illustrating the user plane protocols stacks for a PDU session according to the prior art.

FIG. 2 is a block diagram showing 5G NR user plane and control functions with monolithic gNB according to the prior art.

FIG. 3 is a block diagram showing NG-RAN architecture according to the prior art.

FIG. 4 is a block diagram showing NG-RAN architecture and illustrating separation of CU-CP and CU-UP according to the prior art.

FIG. 5 is a block diagram illustrating DL L2 structure according to the prior art.

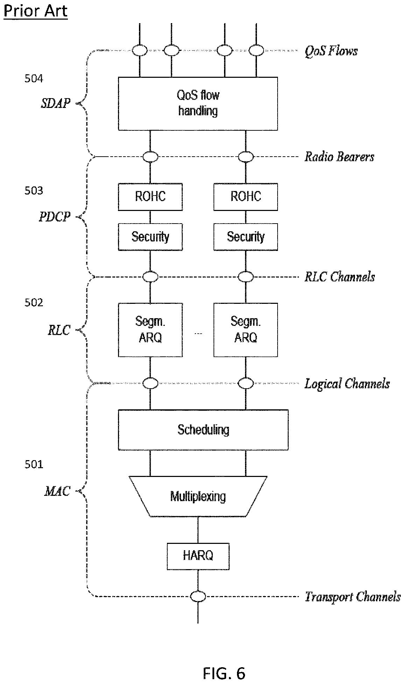

FIG. 6 is a block diagram illustrating UL L2 structure according to the prior art.

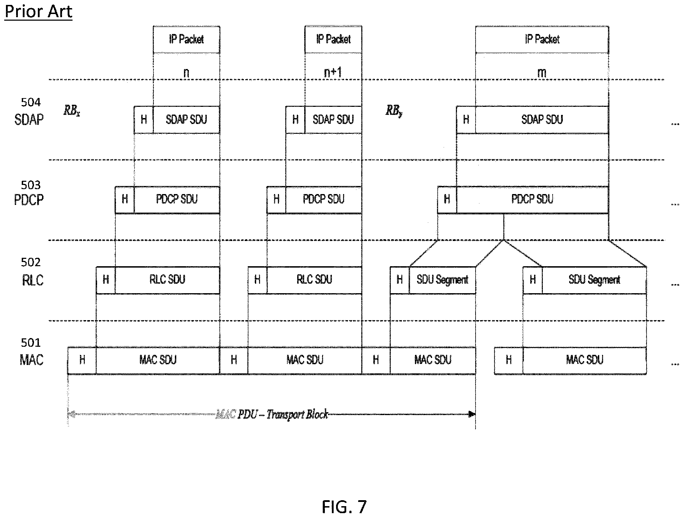

FIG. 7 is a block diagram illustrating L2 data flow example where H denotes headers or sub-headers according to the prior art.

FIG. 8 is a block diagram showing an overview of O-RAN according to the prior art.

FIG. 9 is a block diagram illustrating an example PDU session comprising multiple DRBs according to the prior art.

FIG. 10 is a flow diagram for a 3GPP 5G network architecture in the context of multiple PDU sessions involving multiple DRBs and QFIs according to the prior art.

FIG. 11 is a flow diagram for a 3GPP 5G network architecture in the context of RRM for connecting UE to the network via RU with a MAC Scheduler according to the prior art.

FIG. 12 is a flow diagram illustrating a high-level view of a UE establishing a PDU session with a specific DNN according to the prior art.

FIG. 13 is a flow diagram illustrating a NSI that could be composed of a single NSSI or multiple NSSIs according to the prior art.

FIG. 14 is a simplified view of classes and attributes of a 5G NRM for resource allocation to slices according to the prior art.

FIG. 15 illustrates a structure of a RRMPolicyRatio providing a resource model for distribution of resources among slices according to the prior art.

FIG. 16A illustrates DUD PDUs used to carry PDCP PDUs from CU-UP to DU for each DRB according to the prior art.

FIG. 16B illustrates a DDDS message that conveys DBS, DDR and other parameters from DU to CU-UP for each DRB as part of flow control feedback according to the prior art.

FIG. 17 is a block diagram illustrating a Markov Decision Process (MDP) according to the prior art.

FIG. 18 is a flowchart illustrating the workings of Q-learning according to the prior art.

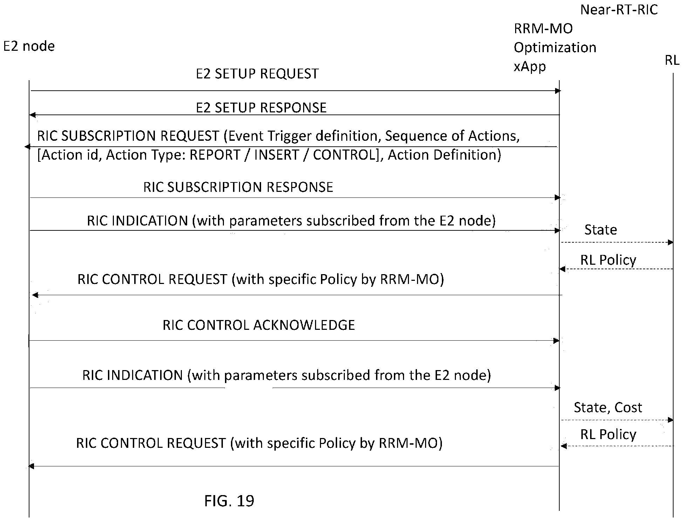

FIG. 19 is a flow diagram illustrating a Radio Resource Management - MultiObjective (RRM-MO) optimization module hosted at a near-RT-RIC server, the RIC subscription procedure between the Near-RT-Server and the E2 node enhanced to support parameters transmitted from a DU or a CU to a near-RT-RIC according to a configuration of the invention.

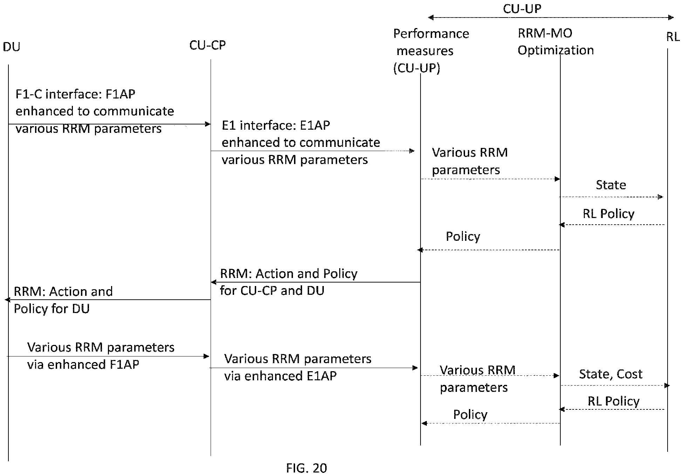

FIG. 20 is a flow diagram showing an RRM-MO optimization module hosted at the CU-UP, the F1 and E1 interfaces are enhanced to communicate parameters from the DU to CU-UP by adding new messages or by adding new fields or using reserved fields, which are analyzed at an RRM-MO optimization module for each DRB, each UE, each slice and each cell at the CU-UP according to a configuration of the invention.

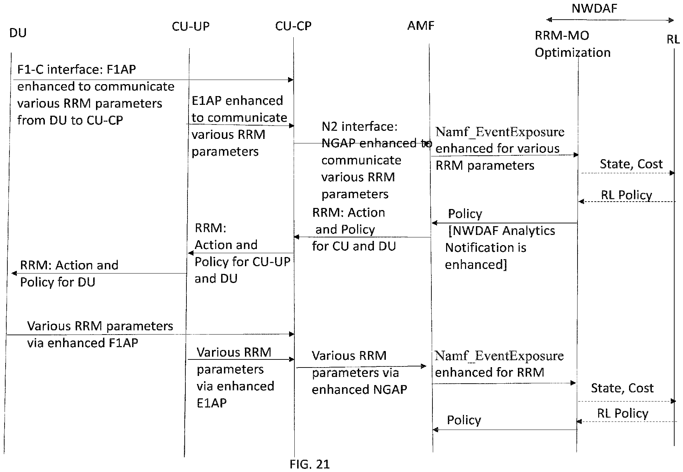

FIG. 21 is a flow diagram showing an RRM-MO optimization module hosted at the NWDAF (Network Data Analytics Function), the F1AP protocol associated with F1-C is enhanced to communicate parameters from the DU to the CU-CP, which are analyzed at an RRM-MO optimization module for each DRB, each UE, each slice and each cell according to a configuration of the invention.

## DETAILED DESCRIPTION

According to a first example embodiment of the system and method according to the present disclosure, a Radio Resource Management - MultiObjective (RRM-MO) optimization module is used to help achieve various performance goals discussed earlier. This RRM-MO optimization module can be hosted at one of the following components, for example: 1) the RIC (e.g., Near-RT or RT RIC) server; 2) the gNB (e.g., at CU or distributed across CU and DU); 3) the 5G Network Data Analytics Function (NWDAF) server; or 4) Operations, Administration Maintenance (OAM) server.

According to the first example embodiment, various parameters (which include performance measurements or KPI also) are communicated from the gNB-DU to the RRM-MO optimization module. These could be communicated periodically or could be sent at some time instants based on some triggering conditions. These parameters which are sent from the gNB-DU to the RRM-MO optimization module include the following for each cell k:

A) For cell k: 1) Configuration for this cell (e.g. frequency band, channel bandwidth, maximum number of spatial streams, and the like). This information is sent once and needs to be sent again only if there are some changes in the configuration (e.g., the number of layers reduced from four to two for energy saving in the cell k). 2) (UE distribution) scenario p for cell k at that time: the number and identity of UEs being supported in that cell (with additional UE specific information as below).

B) For each UE h (which has one or more active DRBs in cell k). 1) UE id (including gNB-CU UE F1AP ID and gNB-DU UE F1AP ID to uniquely identify the UE association over the F1 interface between gNB-DU and gNB-CU). 2) Channel Quality Information (CQI): It is communicated from the DU to the RRM-MO module and could be in various forms including instantaneous value, weighted average and other formats (such as frequency of occurrence in specific CQI ranges). 3) Location of the UE is included (if available). 4) List of active Component Carriers (CCs) for Carrier Aggregation (CA) for that UE. 5) UE level throughput (e.g., measured at RLC level in the DU).

C) Values of various parameters used by the per-DRB RRM, slice-aware RRM and CoMP Methods. 1) Parameters used in the per-DRB scheduler at DU: $W_{5QI}$, $W_{GBR}$, $W_{PDB}$, $W_{PF}$, $W_{BO}$, $\alpha$ and $\beta$. 2) Weights used in the slice-aware scheduler: $W_Z$, $W_Z^d$. 3) Slice related parameters for DU resources (such as PRBs for a slice in a cell): rRMPolicyDedicatedRatio, rRMPolicyMinRatio, rRMPolicyMaxRatio. 4) The number of sub-bands used for CoMP type of methds: sub-bands(k) and sub-bands-blank(k) for cell k.

D) For each (active) DRB m associated with UE h which is active in the cell k. 1) DRB id to help identify that DRB for UE h (including the F1-U DL GTP TEID and F1-U UL GTP TEID). Note that the RRM-MO optimization module can also compute number of DRBs associated with each UE h in cell k as it gets information for various DRBs in that cell. 2) 5QI of that DRB. 3) Slice id with which this DRB is associated with. 4) Delay characteristics of packets waiting in the RLC queues at DU for DRB m including a) Median of the waiting time of packets in the RLC queue for DRB m, and b) (Normalized) Buffer occupancy in the RLC queue for DRB m (e.g. for DL traffic in DU). 5) Throughput experienced by the DRB m as its packets traverse the DU. For example, this could be computed at RLC level. 6) Packet Error Rate (PER) experienced by DRB m over the air-interface between the DU and the UE.

E) For each slice z with one or more active DRBs in the cell k. 1) The slice level throughput for slice z in cell k. Here this slice level throughput is as observed at the DU and could be computed at the RLC level. Alternatively, the RRM-MO module could use the throughput related information provided by the DU for each DRB corresponding to this slice z from cell k and use that to compute aggregate slice level throughput. 2) The number of DRBs corresponding to the slice z for which RLC packets had to wait in the RLC queues in DU longer than the delay budget of the corresponding DRBs in the DU. Alternatively, the RRM-MO module can derive this information using the delay characteristics of DRBs provided by the DU as part of DRB related information discussed earlier.

Some parameters (including the performance measurements or KPIs) are sent from the gNB-CU to the RRM-MO optimization module and these include the following for each cell k:

A) Configuration for this cell: Some of these parameters can be sent from the CU and some from the DU to the RRM-MO optimization module.

B) For each UE h (which has one or more active DRBs in cell k): 1) UE id (including gNB-CU UE F1AP ID and gNB-DU UE F1AP ID to uniquely identify the UE association over the F1 interface between gNB-DU and gNB-CU). 2) RSRP reported by the UE. 3) Identity of Component Carriers (CCs) for Carrier Aggregation (CA) which are configured for that UE. (Note: not all of these may be activated at a given point of time. DU informs the set of active CCs to the RRM-MO module). 4) UE level throughput measured at CU-UP (at the PDCP SDU level).

C) For each (active) DRB m associated with UE h which is active in the cell k: 1) DRB id to help identify that DRB for UE h (including the F1-U DL GTP TEID and F1-U UL GTP TEID). 2) 5QI of that DRB. 3) Slice id with which this DRB is associated with. 4) Delay characteristics of packets waiting in the PDCP queues at CU for DRB m: Note that the mid-haul used between CU and DU may not be totally reliable and this can result in packet loss over the F1 interface. CU-UP retransmits such lost DL packets to the DU and the delay characteristics measures given here consider transmit and retransmit PDCP queues at the CU. 5) Median of the waiting time of packets in the PDCP queue for DRB m. 6) (Normalized) Buffer occupancy in the PDCP queue for that DRB m at CU-UP. 7) Throughput experienced by the DRB m as its packets traverse the CU. For example, this could be computed at PDCP level.

D) Slice related parameters for the CU resources (such as for the number of PDU sessions or DRBs in a slice): rRMPolicyDedicatedRatio, rRMPolicyMinRatio, rRMPolicyMaxRatio.

Mid-haul (MH) related performance measures communicated from CU and DU to RRM-MO optimization module:

A) This measures Downlink MH Packet Error Rate (DL MH-PER) experienced by a DRB as CU-UP transmits packets to DU over the F1 interface (for DL traffic). The mid-haul F1 interface between DU and CU-UP may not be fully reliable and DU may request retransmission of lost downlink packets using NR-U flow control mechanism. This DL MH PER is computed using this information at the DU as well as at the CU-UP and the value of this can be somewhat different at DU and CU at a given point of time as some of the packets may still be in the transit between CU-UP and DU.

B) For DRBs corresponding to certain QoS classes (e.g. delay sensitive classes such as 5QI 1, 5QI 2, 5QI 3 and 5QI 7) which send DL data from CU-UP to DU: the time interval between consecutive DL Data Delivery Status (DDDS) messages from DU to CU-UP for each such DRB. This is communicated from DU to the RRM-MO optimization module.

C) The measured Uplink MH Packet Error Rate (UL MH-PER) experienced by each DRB m as DU transmits packets to CU-UP over the F1 interface. As discussed earlier, the mid-haul F1 interface between the CU-UP and the DU may not be totally reliable. A retransmission protocol can be provided between DU and CU-UP for UL RLC SDUs with which CU-UP can request retransmission of lost packets over mid-haul from DU. This MH PER is computed using that information at CU-UP as well as at DU for uplink RLC SDUs and can be somewhat different at a given point of time as some of the packets can still be in transit between DU and CU-UP.

D) For DRBs corresponding to certain QoS classes (e.g., delay sensitive classes such as 5QI 1, 5QI 2, 5QI 3 and 5QI 7) that send UL data from DU to CU-UP: the time interval between consecutive UL Data Delivery Status (UDDS) messages from CU-UP to DU for each such DRB. This is communicated from CU-UP to the RRM-MO optimization module,

For the case where the RRM-MO optimization module is hosted at the near-RT-RIC server, the RIC subscription procedure between the Near-RT-Server and the E2 node (which is DU for parameters that are communicated from DU to Near-RT-RIC, and CU for parameters that are communicated from CU to Near-RT-RIC) is enhanced to support the above parameters. As shown in FIG. 19, these performance measurements are analyzed at the RRM-MO optimization module for each DRB, each UE, each slice and each cell. The RRM-MO module provides state and cost (or reward) related information to the Reinforcement Learning (RL) module running at the Near-RT RIC. The RL module provides the Policy to the RRM-MO module which may enhance this. This policy is communicated to the E2 node and RIC Control Request is enhanced for this purpose.

For the case where the RRM-MO optimization module is hosted at the CU-UP, the F1 and E1 interfaces are enhanced to communicate above parameters from the DU to CU-UP. For example, they could be sent from DU to CU-CP by enhancing the F1-C interface between DU and CU-CP and could be subsequently sent from CU-CP to CU-UP by enhancing the E1 interface between the CU-CP and CU-UP. For the DU to CU-CP, the F1AP (F1 Application Protocol) running over the F1-C interface can be enhanced to carry the above parameters by adding new messages to carry these or by adding new fields or using some reserved fields (i.e., which are not used at present) in the existing F1AP messages. Similarly for the CU-CP to CU-UP, the E1AP protocol (E1 Application Protocol) running over the E1 interface can be enhanced to carry the above parameters by adding new messages to carry these or by adding new fields or using some reserved fields (i.e., which are not used at present) in the existing E1 messages. For some other parameters that are available or measured at the CU-UP, the RRM-MO optimization module can use those directly. As shown in FIG. 20, these parameters are analyzed at the RRM-MO optimization module for each DRB, each UE, each slice and each cell, at the CU-UP. The RRM-MO module provides state and cost (or reward) related information to the RL module running at the CU-UP. The RL module provides the Policy to the RRM-MO module, which may enhance this. This Policy is communicated from the RRM-MO module to CU-CP (by enhancing the E1AP protocol over the E1 interface) and from the CU-CP to the DU (by enhancing the F1AP protocol over the F1-C interface).

For the case where the RRM-MO optimization module is hosted at the NWDAF, the F1AP protocol associated with F1-C is enhanced to communicate the above parameters from the DU to the CU-CP. For parameters measured or available at the CU-UP, the E1AP protocol running over the E1 interface is enhanced to carry above parameters from the CU-UP to the CU-CP. These parameters collected at CU-CP (from DU and CU-UP) are communicated to AMF by enhancing the Next Generation Application Protocol (NGAP) protocol running over the N2 interface between the CU-CP and the AMF. The Namf_EventExposure service offered by AMF is enhanced to allow the NWDAF to subscribe to these parameters. As shown in FIG. 21, these performance measurements are analyzed at the RRM-MO optimization module for each DRB, each UE, each slice and each cell. The RRM-MO module provides state and cost (or reward) related information to the RL module running at the NWDAF. The RL module analyzes this and provides the Policy to the RRM-MO module, which can enhance this before communicating to the AMF. The Nnwdaf_AnalyticsSubscription service provided by NWDAF can be enhanced for this purpose. The Policy is next communicated to the CU from the AMF and to the DU via the CU-CP. The NGAP running over the N2 interface, the E1AP running over the E1 interface and the F1AP over the F1-C interface are enhanced for this purpose.

RRM-MO optimization related decisions using reinforcement learning: In this section, mapping of the RRM-MO optimization related decision-making process to a reinforcement learning problem by formalizing it using an MDP is discussed. As mentioned earlier, MDP involves four elements: States; Actions; Costs/Rewards; and Transition Probabilities. These elements are represented as follows: 1) S: A set of finite States S. 2) A: A set of finite Actions A. 3) C(s,a): Immediate cost (or expected immediate cost) incurred after transitioning from state $s$ to state $s'$, due to action a. 4) P: represents the Transition probability matrix corresponding to state space S and action space A, where P(s'|s,a): Transition Probability of landing in state s' when action a is taken at state s.

From the various parameters (including performance measures) that are communicated from the DU and the CU to the RRM-MO module, several of these are provided as state variables for the RL module. The range of values taken by each state variable to n levels is quantified, where n is a finite value (e.g., n=2 or 4 or 8 or 16 or a higher number, depending on the parameter being quantified).

The set of state variables for cell k is denoted as $S_k^{cell}$ and it includes the following:

A) (UE distribution) scenario p for cell k at that time indicated by percentage of UEs in each zone. For example, n1(p) % of cell-center UEs, n2(p) % of cell-mid UEs and remaining (100 - nl (p) - n2(p)) % cell-edge UEs in poor radio conditions for the case where three zones are used in that cell. Alternatively, each UE can be considered in its own zone (resulting in the number of zones being equal to the number of UEs) and the weighted average value of RSRP reported by the UE can be used as the associated state parameter.

B) Observed cell throughput for cell k for current scenario p, denoted as cellScenarioObservedThro(k, p).

C) Spectrum efficiency for cell k for current scenario p using observed throughput, denoted as cellScenarioSpectrumEfficiency(k, p).

D) Percentage of UEs for which the observed UE throughput in (radio) zone r for cell k (i.e. ueObservedThro(k, r) is above the minimum required throughput for a UE in that zone r, ueMinThroUe(k, r).

E) Total number of DRBs (for any 5QI), numDRBs(k), which are being supported in cell k at present.

F) Number of DRBs for 5Q j for current scenario p that are supported in cell k, denoted as trafficMix5QIObserved(k, p, j). For example, cell k, could be supporting trafficMix5QIObserved(k, p, 1)=40, trafficMix5QIObserved(k, p, 7) = 50 and trafficMix5QIObserved(k, p, 9) = 100 for current scenario p.

G) Fraction (or percentage) of QoS flows, denoted as cellQoS5QIObservedPerf(k,j), belonging to 5QI j for which QoS requirements are being met in cell k. For example, cellQoS5QIObserved(k, 1)= 0.98 indicating that QoS requirements of 98% of DRBs corresponding to 5QI 1 (i.e., VoNR in 5G networks), cellQoS5QIObserved(k,7)= 0.94 indicating QoS requirements for 94% of DRBs corresponding to 5QI 7 and cellQoS5QIObservedPerf(k,9)=0.96 indicating that QoS requirements for 96% of the DRBs corresponding to 5QI 9 are being met in the cell k.

H) Fraction (or percentage) of slices, denoted as cellSliceObservedPerf(k), for which performance requirements are being met in the cell k.

I) Sub-bands(k) for cell k which are used for FSS and CoMP type of techniques.

The state $S^{cluster}$ is the set of state variables of all the cells in a cluster, represented as

$$S^{cluster} = (S_1^{cell}, ..., S_k^{cell}, ..., S_L^{cell})$$ for L cells. Here, a cluster can be defined using operator policies.

The set of state variables for slice z for cell k is denoted as $S_z^{slice}(k)$ and it includes the following: 1) Observed throughput violation for slice z. It is denoted as sliceObservedThroViol(k,z) for slice z in cell k. 2) Percentage of DRBs for which delay requirements are not met for that slice. It is denoted as sliceObservedDRBsDelayViol(k, z) for slice z in cell k

The state $SS^{cluster}$ includes the state variables of all the cells in a cluster and the state variables corresponding to slices with active DRBs in each such cell. It is represented as $$SS^{cluster} = (SS_1^{cell}, ..., SS_k^{cell}, ..., SS_L^{cell})$$ for L cells.

Here, $SS_k^{cell}$ contains state variables for cell k and each slice z in that cell with active DRBs as below:

$$SS_k^{cell} = \left\{ S_k^{cell}, \left( S_z^{slice}(k) \text{ for each slice z in cell k with active DRBs} \right) \right\}$$

The set of state variables for UE h in cell k and for each associated DRB m, is denoted as $S_{h,m}^{UE,DRB}(k)$. It includes the following for each UE h in cell k:

A) UE Channel State Information (CSI) for each UE h in cell k,

B) Observed UE throughput for each UE h in zone r for cell k, ueObservedThro(k, r, h),

C) Total number of DRBs (for any 5QI), numDRBsUE(k,h), which are being supported by UE h in cell k at present,

D) Observed DL aggregate bit rate for that UE (for non-GBR DRBs). It is denoted as ueObservedDLAbr(k,h) for UE h in cell k.

E) Observed UL aggregate bit rate for that UE (for non-GBR DRBs). It is denoted as ueObservedULAbr(k,h) for UE h in cell k.

E) Median of the waiting time of packets in the RLC queue for each DRB. It is denoted as medianRLCWaitTime(k, h, m) for DRB m corresponding to UE h in cell k.

F) (Normalized) Buffer occupancy in the RLC queue for that DRB at DU. This is denoted as sizeRLCQueue(k,h,m) for DRB m corresponding to UE h in cell k.

G) Median of the waiting time of packets in the PDCP queue for each DRB m at CU-UP. It is denoted as medianPDCPWaitTime(k, h, m) for DRB m corresponding to UE h in cell k.

H) (Normalized) Buffer occupancy in the PDCP queue for that DRB at the CU-UP. This is denoted as sizePDCPQueue(k,h,m) for DRB m corresponding to UE h in cell k.

I) Residual DL midhaul packet error rate for each DRB m corresponding to 5QI j, sending data in the DL direction (from CU-UP to DU), after the maximum number of retransmissions attempts for that DRB over the midhaul interface F1 have been attempted. We use measurement taken at the DU here and denote this as R-DL-MH-PER(k,m,j).

J) Residual UL midhaul packer error rate for each DRB m corresponding to 5QI j, sending data in the UL direction (from DU to CU-UP), after the maximum number of retransmissions allowed for that DRB over the midhaul interface F1 have been attempted. We use measurement taken at the CU-UP here and denote this as R-UL-MH-PER(k,m, j).

K) Packet error rate (PER) for each DRB (over the air-interface) in each direction. It is denoted as PER(k,m, j) for DRB m corresponding to 5QI j in cell k.

The set of state variables of all the cells in a cluster, all the slices with active DRBs in each cell, all the UEs with active DRBs in each cell and all the DRBs for each such UE, is denoted as $SSS^{cluster}$. It is represented as

$$SSS^{cluster} = (SSS_1^{cell}, \ldots, SSS_k^{cell}, \ldots, SSS_L^{cell})$$ for L cells. Here, for cell k,

$$SSS_k^{cell} = \{SS_k^{cell},$$

$$\left(S_{h,m}^{UE,DRB}(k) \text{ for each UE h in cell k and each active DRB m for UE h}\right)\}$$

The various parameters specified above are sent from the DU and the CU to the RRM-MO module periodically. These are also communicated when a given scenario changes in the cell. A scenario can change due to reasons such as, a new UE joining the cell after being handed over from a neighboring cell, a UE leaving the cell after being handed off to another neighboring cell, RSRP information changing for a UE that results in a change of its zone (e.g., a cell-edge UE becomes a cell-mid UE as the UE moves in an area), an existing UE initiating a new DRB or terminating an existing DRB, an existing UE moving to RRC Connected state (e.g., a 5G UE moving from RRC Inactive or RRC Idle state to RRC Connected state) or a new DRB getting associated with a slice. For example, state information for a cell can be communicated at time T, 2T, 3T, 3T + μ, 4T, 4T+ν, 5T and so on. Here, this information is being communicated periodically every time T and at certain time instants (such as 3T + μ and 4T+ν, where μ and ν are greater than zero and less than T) when there are some changes in the cell scenario as described above.

**Action** (A): The following parameters are updated as part of the Action taken by the RL module: 1) For the QoS scheduler as part of the MAC layer at the DU (for each cell) $W_{5QI}$, $W_{GBR}$, $W_{PDB}$, $W_{PF}$, $W_{BO}$, α and β. 2) For each slice z (in each cell): a) $W_Z$, $W_Z^d$ (for slice-aware scheduler), and b) rRMPolicyDedicatedRatio, rRMPolicyMinRatio, rRMPolicyMaxRatio. 3) Frequency of flow control feedback from DU to CU-UP for each DRB m (which is sending data in downlink direction) corresponding to UE h in cell k, denoted as freqFCfeedbackDL(k,h,m). 4) Frequency of error correction feedback from CU-UP to DU for each DRB n (which is sending data in uplink direction) for UE h in cell k, denoted as freqECfeedbackUL(k, h, n). 5) sub-bands(k) for cell k.

The range of values taken by above parameters to n levels is quantified, where n is a finite value (e.g., n=2 or 4 or 8 or 16 or a higher number, depending on the parameter being quantified).

For each cell k, take action for parameter, θ, at time t as follows: $a_k(t; θ) ε \{0, δ(θ), -δ(θ)\}$, with $a_k(t; θ)=0$ indicating no change in the value of parameter θ, $a_k(t; 0)= δ(θ)$, indicating increase in value of θ by δ(θ), and $a_k(t; θ)= - δ(θ)$ indicating decrease in value of 0 by δ(θ). Value of δ(θ) depends on the parameters, θ, which is being updated and can be different for two parameters. Each cell-level parameter such as $W_{5QI}$, $W_{GBR}$, $W_{PDB}$, $W_{PF}$, $W_{BO}$, α, β, $W_Z$, $W_Z^d$ and sun-bands(k) are represented by θ above. Note that $W_Z$ and $W_Z^d$ are slice-related parameters but the operator can choose to have common values of these parameters for all slices in each cell. In that case, these could be counted along with the cell-level state variables.

The set of actions for cell k is denoted as $A_k^{cell}$. Some example actions taken by the RL (and RRM-MO) module for cell k are given below:

1) $a_k(t; W_{PF}) ε \{0, δ(W_{PF}), -δ(W_{PF})\}$, with $a_k(t; W_{PF})=0$ indicating no change in the value of $W_{PF}$, $a_k(t; W_{PF})= δ(W_{PF})$, indicating increase in value of $W_{PF}$ by δ(W_{PF}), and $a_k(t; W_{PF})= - δ(W_{PF})$ indicating decrease in value of $W_{PF}$ by δ(WP_F);

2) $a_k(t; W_{PDB}) ε \{0, δ(W_{PDB}), -δ(W_{PDB})\}$, with $a_k(t; W_{PDB})=0$ indicating no change in the value of $W_{PDB}$, $a_k(t; W_{PDB})= δ(W_{PDB})$, indicating increase in value of $W_{PDB}$ by δ(W_{PDB}), and $a_k(t; W_{PDB})= - δ(W_{PDB})$ indicating decrease in value of

$W_{PDB}$ by $\delta(W_{PDB})$;

3) $a_k(t; _{WGBR})\varepsilon\{0, \delta(W_{GBR}), -\delta(W_{GSR})\}$, with $a_k(t; W_{GBR})=0$ indicating no change in the value of $W_{PDB}$, $a_k(t; W_{GBR})=\delta(W_{GBR})$, indicating increase in value of $W_{GBR}$ by $\delta(W_{GBR})$, and $a_k(t; W_{GBR})=-\delta(W_{GBR})$ indicating decrease in value of $W_{GBR}$ by $\delta(W_{GBR})$;

4) $a_k(t; W_{BO})\varepsilon\{0, \delta(W_{BO}), -\delta(W_{BO})\}$, with $a_k(t; W_{BO})=0$ indicating no change in the value of $W_{BO}$, $a_k(t; W_{BO})=\delta(W_{BO})$, indicating increase in value of $W_{BO}$ by $\delta(W_{BO})$, and $a_k(t; W_{BO})=-\delta(W_{BO})$ indicating decrease in value of $W_{BO}$ by $\delta(W_{BO})$;

5) $a_k(t; \alpha)\varepsilon\{0, \delta(\alpha), -\delta(\alpha)\}$, with $a_k(t; \alpha)=0$ indicating no change in the value of $\alpha$, $a_k(t; \alpha)=\delta(\alpha)$, indicating increase in value of $\alpha$ by $\delta(\alpha)$, and $a_k(t; \alpha)=-\delta(\alpha)$ indicating decrease in value of $\alpha$ by $\delta(\alpha)$;

6) $a_k(t; \beta)\varepsilon\{0, \delta(\beta), -\delta(\beta)\}$, with $a_k(t; \beta)=0$ indicating no change in the value of $\beta$, $a_k(t; \beta)=\delta(\beta)$, indicating increase in value of $\beta$ by $\delta(\beta)$, and $a_k(t; \beta)=-\delta(\beta)$ indicating decrease in value of $\beta$ by $\delta(\beta)$;

7) $a_k(t; W_Z^d)\epsilon\{0, \delta(W_Z^d), -\delta(W_Z^d)\}$, with $a_k(t; W_Z^d)=0$ indicating no change in the value of $W_Z^d$, $a_k(t; W_Z^d)=\delta(W_Z^d)$, indicating increase in value of $W_Z^d$ by $\delta(W_Z^d)$, and $a_k(t; W_Z^d)=-\delta(W_Z^d)$ indicating decrease in value of $W_Z^d$ by $\delta(W_Z^d)$.

The common action across all L cells in the cluster is represented as an array of actions for each cell i.e., $(a_1, a_2..., a_L)$ and it is represented as $A^{cluster}$. State information used is defined for $S^{cluster}$.

For each slice z corresponding to cell k, take action for parameter, $\theta$, at time t as below:

1) $a_{k.s}(t; \theta)\varepsilon\{0, \delta(\theta), -\delta(\theta)\}$, with $a_{k.s}(t; 0)=0$ indicating no change in the value of parameter $\theta$, $a_{k.s}(t; \theta)=\delta(\theta)$, indicating increase in value of $\theta$ by $\delta(\theta)$, and $a_{k.s}(t; \theta)=-\delta(\theta)$ indicating decrease in value of $\theta$ by $\delta(\theta)$. Each slice related parameter such as rRMPolicyDedicatedRatio, rRMPolicyMinRatio and rRMPolicyMaxRatio is represented by $\theta$ above. Note that $W_Z$ and $W_Z^d$ are slice-related parameters but can have common values for all slices in each cell. In that case, these could be counted along with the cell-level parameters. If different values of $W_Z$ and $W_Z^d$ for each slice are allowed, these could be counted along with slice-level parameters.

The set of actions for each slice z in cell k is denoted as $A_Z^{slice}(k)$. Some example actions taken by the RL (and RRM-MO) module for slice z corresponding to cell k are given below:

1) $a_{k,s}(t; rRMPolicyMinRatio)\varepsilon\{0, \delta(rRMPolicyMinRatio), -\delta(rRMPolicyMinRatio)\}$, with $a_{k,s}(t; rRMPolicyMinRatio)=0$ indicating no change in the value of rRMPolicyMinRatio, $a_{k,s}(t; rRMPolicyMinRatio)=\delta(rRMPolicyMinRatio)$, indicating increase in value of rRMPolicyMinRatio by $\delta(rRMPolicyMinRatio)$, and $a_{k,s}(t; rRMPolicyMinRatio)=-\delta(rRMPolicyMinRatio)$ indicating decrease in value of rRMPolicyMinRatio by $\delta(rRMPolicyMinRatio)$.

2) $a_{k,s}(t; rRMPolicyMaxRatio)\varepsilon\{0, \delta(rRMPolicyMaxRatio), -\delta(rRMPolicyMaxRatio)\}$, with $a_{k,s}(t; rRMPolicyMaxRatio)=0$ indicating no change in the value of rRMPolicyMaxRatio, $a_{k,s}(t; rRMPolicyMaxRatio)=\delta(rRMPolicyMaxRatio)$, indicating increase in value of rRMPolicyMaxRatio by $\delta(rRMPolicyMaxRatio)$, and $a_{k,s}(t; rRMPolicyMaxRatio)=-\delta(rRMPolicyMaxRatio)$ indicating decrease in value of rRMPolicyMaxRatio by $\delta(rRMPolicyMaxRatio)$.

State information used is as defined for $SS^{cluster}$ and the set of actions across all L cells and all slices for each cell is denoted as $AA^{cluster}$. Note that this set of actions includes action on state variables for each cell in a cluster and each slice in a cell as specified above.

For DRB m corresponding to UE h in cell k, take action for parameter, $\theta$, at time t as below:

1) $a_{k.h.m}(t; \theta)\varepsilon\{0, \delta(\theta), -\delta(\theta)\}$, with $a_{k.h.m}(t; \theta)=0$ indicating no change in the value of parameter $\theta$, $a_{k,h,m}(t; 0)=\delta(\theta)$, indicating increase in value of 0 by $\delta(\theta)$, and $a_{k,h,m}(t; \theta)=-\delta(\theta)$ indicating decrease in value of $\theta$ by $\delta(\theta)$. Each DRB

related parameter such as freqFCfeedbackDL and freqECfeedbackUL are represented by θ above.

The set of actions for each DRB m associated with UE h in cell k is denoted as $A_{h,m}^{UE,DRB}(k)$. Some example actions taken by the RL (and RRM-MO) module for DRB m corresponding to UE h in cell k are given below:

1) $a_{k,h,m}$(t; freqFCfeedbackDL)ε{0, δ(freqFCfeedbackDL), - δ(freqFCfeedbackDL)}, with $a_{k,h,m}$(t; freqFCfeedbackDL) =0 indicating no change in the value of freqFCfeedbackDL, $a_{k,h,m}$(t; freqFCfeedbackDL)= δ(freqFCfeedbackDL), indicating increase in value of freqFCfeedbackDL by δ(freqFCfeedbackDL), and $a_{k,h,m}$(t; freqFCfeedbackDL)= - δ (freqFCfeedbackDL) indicating decrease in value of freqFCfeedbackDL by δ(freqFCfeedbackDL).
2) $a_{k,h,m}$(t; freqECfeedbackUL)ε {0, δ(freqECfeedbackUL), - δ(freqECfeedbackUL)}, with $a_{k,h,m}$(t; freqECfeedback-UL )=0 indicating no change in the value of freqECfeedbackUL, $a_{k,h,m}$(t; freqECfeedbackUL)= δ(freqECfeedbackUL), indicating increase in value of freqECfeedbackUL by δ(freqECfeedbackUL), and $a_{k,h,m}$(t; freqECfeedbackUL)= - δ (freqECfeedbackUL) indicating decrease in value of freqECfeedbackUL by δ(freqECfeedbackUL).

State information used is as defined for *SSS^culster* and the set of actions across all L cells, all slices for each cell and DRBs for each UE are denoted as *AAA^cluster.* Note that this set of actions includes action on state variables for each cell in a cluster, each slice in a cell and each DRB (considering each UE) as specified above.

The RRM-MO module gets the list of Actions from the RL module as part of *AAA^cluster* (or *AA^cluster* or *A^cluster*). It communicates these Actions to the DU and CU (as appropriate) and provides additional information for graceful enforcement of these Actions at the DU and the CU. For example, one of the actions could be to increase frequency of flow control feedback, freqFCfeedbackDL, for some DRBs in a cell. For RLC-AM DRB, the DU sends flow control feedback (as part of DDDS) to CU-UP and asks for additonal data from CU-UP when the DU receives RLC Status message from the UE (indicating that the UE has rceived certain packets correctly from the DU). If the RRM-MO module is asking to send these flow control (i.e., DDDS) messages more quickly for this DRB from the DU to the CU-UP, some of these DDDS messages may need to be sent by the DU to the CU-UP even before getting the RLC Status message from the UE and the DU may not have enough buffer space to store DL PDCP PDUs received from CU-UP (as the DU would not have cleared the buffer space from the corresponding RLC queue because it didn't receive RLC Ack from the UE). For this type of action (i.e., when it asks for more frequent DDDS messages), the RRM-MO module sends an additional indication to the DU and asks it to allocate additional buffer space for this DRB if possible. If the DRB is supporting RLC-UM mode, it changes the time period with which the DDDS messages are sent from the DU to the CU-UP. Similarly, for scheduler related parameters (such as α and β), it can indicate the number of slots to wait before applying the "action" indicated by the RL module.

Cost (or reward): the set of state variables for a cluster of L cells is denoted as *SSS^cluster* and is given as:

$$SSS^{cluster} = (SSS_1^{cell}, ..., SSS_k^{cell}, ..., SSS_L^{cell})$$

. For cell k, the set of state variables is given as:

$$SSS_k^{cell} = \left\{ \begin{array}{c} S_k^{cell}, \\ \left(S_Z^{slice}(k) \text{for each slice z in cell k with active DRBs}\right), \\ \left(S_{h,m}^{UE,DRB}(k) \text{ for each active DRB m associated with UE h in cell k}\right) \end{array} \right\}$$

The set of actions for a cluster of L cells is given as:

$$AAA^{cluster} = (AAA_1^{cell}, ..., AAA_k^{cell}, ..., AAA_L^{cell}).$$

For cell k, the set of actions is given as:

$$AAA_k^{cell} = \left\{ \begin{array}{c} A_k^{cell}, \\ \left(A_Z^{slice}(k) \text{for each slice z in cell k with active DRBs}\right), \\ \left(A_{h,m}^{UE,DRB}(k) \text{ for each active DRB m associated with UE h in cell k}\right) \end{array} \right\}$$

If state s is chosen from *SSS^cluster,* the corresponding action is chosen from *AAA^cluster.* In this case, state s for cell k could contain state variables for cell k, state variables for each slice z in cell k, state variables for each UE h in cell k and state variables for each DRB m corresponding to UE h in cell k. Alternatively, if state s is chosen from *SS^cluster* , the corresponding action is chosen from $AA^{cluster}$. Otherwise, if state s is chosen from $S^{cluster}$, the corresponding action is chosen from $A^{cluster}$.

As part of the above actions, values of various parameters (such as $W_{5QI}$, $W_{GBR}$, $W_{PDB}$, $W_{PF}$, $\alpha$, $\beta$, $W_Z$, $W_Z^d$, rRMPolicyDedicatedRatio, rRMPolicyMinRatio, rRMPolicyMaxRatio, freqFCfeedbackDL(k,h,m), freqECfeedbackUL(k, h, n) and sub-bands(k) for cell k, slice z, UE h, DRB m) can be changed. A subset of these parameters may change at a give point of time. Value of each such parameter can stay the same or increase or decrease.

At time t, the immediate cost for cell k in state s (including the state of each slice, each UE and each DRB in that cell) with action 'a' is represented with $C^{cell}(s_k(t)=s, a_k(t)=a)= C^{cell,k}(s(t), a(t))$. The cost, $C^{cluster}$, of all the L cells in the cluster is the sum over all the individual costs of the cells (and is equal to $\sum_{k=1}^{L} C^{cell,k}(s(t),a(t))$. Some of these state variables are listed below:

- cellScenarioObservedThro(k, p) for (UE distribution) scenario p in cell k,

- ueObservedThro(k, r, h) for UE h in (radio) zone r in cell k,

- cellScenarioSpectrumEfficiency(k,p) for scenario p in cell k,

- cellQoS5QIObservedPerf(k,j),

- cellSliceObservedPerf(k) for cell k,

- numDRBs(k) for cell k,

- trafficMix5QIObserved,

- sliceObservedThroViol(z,k) for slice z in cell,

- sliceObservedDRBsDelayViol(z,k) for slice z in cell k,

- ueObservedDLAbr(k,h) for UE h in cell k,

- ueObservedULAbr(k,h) for UE h in cell k,

- numDRBsUE(k,h) for UE h in cell k,

- medianRLCWaitTime(k,h,m) for DRB m corresponding to UE h in cell k,

- medianPDCPWaitTime(k,h,m) for DRB m corresponding to UE h in cell k,

- sizeRLCQueue(k,h,m) for DRB m corresponding to UE h in cell k,

- sizePDCPQueue(k,h,m) for DRB m corresponding to UE h in cell k,

- R-DL-MH-PER(k,m, j) for DRB m corresponding to 5QI j in cell k,

- R-UL-MH-PER(k,m,j) for DRB m corresponding to 5QI j in cell k,

- PER(k,m, j) for DRB m corresponding to 5QI j in cell k. To be computed in DL as well as UL direction.

For each cell, the cost can be computed as a function of above state variables and performance targets specified earlier. Some examples are given below:
Cost associated with cell throughput for scenario p is computed as maximum {(cellScenarioMinThro(k, p) - cellScenarioObservedThro(k, p)), 0}. Here, maximum (w,0) is equal to w if w is greater than or equal to zero; otherwise maximum (w,0) is zero.

Cost associated with cell throughput for scenario p could also be computed as maximum {(cellMinThro(k) - cellScenarioObservedThro(k, p)), 0} where the same minimum cell throughput is specified for all scenarios (i.e., minimum throughput for specific scenario p is not specified separately).

Cost associated with cell spectrum efficiency for scenario p could also be computed as maximum {(cellScenarioSpectrumEfficiency(k,p) - cellScenarioMinSpectrumEfficiency(k, p)), 0}.

Cost associated with minimum UE throughput for UE h in (radio) zone r in cell k can be computed as maximum {( ueMinThro(k, r) - ueObservedThro(k, r, h)), 0}.

Cost associated with QoS (or performance) requirements for DRBs corresponding to 5QI j in cell k is given as maximum{(cellQoS5QIMinPerf(k,j) - cellQoS5QIObservedPerf(k,j)),0}.

Cost associated with performance requirements for slices in cell k is given as maximum {(cellSliceMinPerf(k) - cellSliceObservedPerf(k)),0).

Cost associated with throughput violation for each slice z in cell k is given as sliceObservedThro Viol(k,z).

Cost associated with delay violation for DRBs in slice z in cell k is given as sliceObservedDRBsDelayViol(k, z).

Cost associated with any violations to the minimum number of DRBs that need to be supported can be computed as maximum{( minimum(numDRBs(k), numDRBsMin(k)) - numDRBs(k)), 0). Here minimum(numDRBs(k), numDRBsMin(k)) is equal to numDRBs(k) if number of active DRBs at that time in cell k, i.e., numDRBs(k), is less than the minimum number of DRBs, numDRBsMin(k), which need to be supported in that cell. Otherwise, it is equal to numDRBsMin(k).

Cost associated with any violations related to the minimum number of DRBs corresponding to 5QI j which need to be supported for scenario p in cell k is computed using maximum (minimum(trafficMix5QIMin(k,p,j), trafficMix5QIObserved(k,p,j)) - trafficMix5QIObserved(k,p,j)), 0}.

Cost associated with waiting time of RLC packets in DU queues. It is computed using maximum {((target median delay budget in DU for the corresponding 5QI) - medianRLCWaitTime(k,h,m)), 0} for DRB m corresponding to UE h in cell k. Alternatively, this cost function is used as medianRLCWaitTime(k,h,m) if the target median delay budget in the DU for the corresponding 5QI is not specified.

Another cost function using RLC queue size in the DU is used as sizeRLCQueue(k,h,m) for a DRB m corresponding to UE h in cell k.

Cost associated with waiting time of PDCP packets in CU queues. It is computed using maximum {((target median delay budget in CU-UP for the corresponding 5QI) - medianPDCPWaitTime(k,h,m)), 0} for a DRB m corresponding to UE h in cell k. Alternatively, this cost function is used as medianPDCPWaitTime(k,h,m) if a target median delay budget in the CU-UP for the corresponding 5QI is not specified.

Another cost function using delay characteristics in the CU is used as sizePDCPQueue(k,h,m) for a DRB m corresponding to a UE h in cell k.

Cost function associated with packet error rate is computed using R-DL-MH-PER(k,m,j) for a DRB m sending data in the DL direction corresponding to 5QI j, R-UL-MH-PER(k,g, j) for a DRB g sending data in UL direction corresponding to 5QI j, PER over the air-interface for DRBs sending data in the DL and UL directions.

Some of the cost functions above are defined using maximum (w,0) format, where maximum (w,0) is equal to w if w is greater than or equal to zero; otherwise maximum (w,0) is zero. Depending on opertaor policies, cost function for some of these could be of the format maximum ($w^Y$,0) where value of Y can be chosen based on operator policies. For example, Y can be chosen to be equal to or greater than or less than 1 depending on the policies.

The overall cost for that cell is a weighted sum of the cost components given above. The overall cost for the cluster is a weighted sum of the cost of each cell.

Transition probability matrix is of finite size as the state space is finite and the action space is finite. For the unknown transition probability matrix, we initialize the matrix with zero and update it in the following manner. From state *s,* after taking action "a", if the system moves to state *s',* we update P(s'|s, a) = 1. Later, at the same state s and taking the same action "a", if the system moves to state *s",* we update P(s'|s,a) = P(s"|s, a) = 0.5. If the system moves to the state s' at a later point of time from same state s and taking the same action "a", we update *P(s'|s, a)* = 2/3, and *P(s"|s, a)* = 1/3. We update the transition probabilities based on i) the different states to which the system moves (from a given state for the same action) and ii) the number of times the system moved to each such state.

After initial learning of transition probabilities as above, the RL is run with exploration and exploitation strategy. In the exploration stage, choose the action to not change or change the values of parameters (i.e., increase or decrease) at random. In the exploitation stage, choose the action that incurred the minimum cost until now (i.e., during the training phase). epsilonFor example, exploration can be chosen with probability € and exploitation can be chosen with probability (1-€). The parameter, €, is used to control the amount of exploration vs. exploitation in the RL method. Value function is computed as explained earlier for the RL method. For a given state, optimal action is chosen as per the policy learnt using the RL method.

In another embodiment, a set of actions *(AAA^cluster)* as specified earlier, are expanded to include scheduling decisions. For UE h in cell k, action is taken to decide whether to serve that UE h in each slot n. The set of state variables, *SSS^cluster,* is valid for this case. The RL method described earlier chooses the right set of various RRM-related parameters and decides which UEs to serve in each slot in each cell.

This disclosure specifies reinforcement learning based methods to find optimal values of various RRM parameters to meet various KPIs. It proposes multiple techniques to achieve these goals. It also proposes ways to incorporate different types of RRM policies to meet per-cluster / per-cell / per-slice / per-UE / per-DRB performance goals.

**Claims**

1. A system for optimizing and dynamically adjusting Radio Resource Management (RRM) parameters to achieve specified performance objectives according to an RRM policy, the system comprising:

   a Centralized Unit (CU) coupled to a User Plane Function (UPF), the UPF associated with a gNodeB (gNB);
   a Distributed Unit (DU) coupled to the CU;
   an Radio Unit (RU) coupled to the DU, wherein at least one User Equipment (UE) is coupled to said RU;
   a Radio Resource Management - MultiObjective (RRM-MO) optimization module adapted to optimize and dynamically adjust the RRM parameters ;
   wherein the RRM-MO optimzation module is hosted as one of the following components selected from the group consisting of: a Radio Intelligent Controller (RIC) provided as a near-real time RIC server or a real time RIC server, the gNB, a 5G Network Data Analytics Function (NWDAF) server, or an Operations, Administration Maintenance (OAM) server.

2. The system of claim 1, wherein the performance objectives are selected from the group consisting of:

   maximize throughput for cell k,
   minimum cell throughput in cell k,
   minimum cell throughput for scenario p in cell k,
   minimum spectrum efficiency for scenario p in cell k,
   minimum average UE throughput for UE h in zone r in cell k,
   cell level Quality of Service (QoS) Key Performance Indicator (KPI) indicating percentage of DRBs for which for which QoS constraints should be met,
   traffic mix to be supported indicating number of DRBs allowed to communicate data in the cell for various QoS classes for scenario p in cell k, and
   slice level KPI indicating minimum percentage of slices in cell k for which slice performance goals are to be met.

3. The system of claim 2, wherein the RRM parameters for cell k, for each UE in that cell, for each slice in that cell and for each DRB in that cell and communicated from the DU to the RRM-MO optimization module, are selected from the group consisting of:

   for cell level parameters:

   configuration for cell k including frequency band and channel bandwidth,
   UE distribution that comprises scenario p for cell k at a select time, and
   combinations thereof,

   for UE level parameters:

   UE id to uniquely identify UE association between the DU and the CU,
   Channel State Information including Channel Quality Information reported by the UE,
   location of the UE,
   a list of active Component Carriers (CCs) for Carrier Aggregation (CA) for the UE,
   UE level throughput, and
   combinations thereof,

   for per-DRB parameters:

   DRB id to identify DRB m for UE h,
   5G QoS Identifier (5QI) of DRB m,
   slice ID with which the DRB m is associated with,
   delay characteristics of packets waiting in Radio Link Control (RLC) queues at the DU for DRB m,
   throughput experienced by DRB m,

Packet Error Rate (PER) experienced by DRB m between the DU and the UE, and combinations thereof,

for per-slice parameters:

slice level throughput for slice z in cell k,
a number of DRBs corresponding to slice z for which RLC packets had to wait in RLC queues in the DU exceeding a delay budget of corresponding DRBs in the DU, and
combinations thereof.

4. The system of claim 2, wherein the RRM parameters are communicated from the CU to the RRM-MO optimization module.

5. The system of claim 4, wherein the RRM parameters for each UE h are selected from the group consisting of:

configuration for cell k,
UE h ID,
RSRP reported by UE h,
identity of Component Carriers (CCs) for Carrier Aggregation (CA) which are configured for UE h,
UE h level throughput measured at the CU, and
combinations thereof.

6. The system of claim 4, wherein the RRM parameters for each Data Radio Bearer (DRB) m associated with UE h and for each slice are selected from the group consisting of:

DRB m ID to identify DRB m for UE h,
5G QoS Identifier (5QI) of DRB m,
slice ID with which DRB m is associated,
delay characteristics of packets waiting in Packet Data Convergence Protocol (PDCP) queues at the CU for DRB m,
median of the waiting time of packets in a PDCP queue for DRB m,
normalized buffer occupancy in a PDCP queue for DRB m at the CU,
throughput experienced by the DRB m as its packets traverse the CU,
slice-related parameters for CU resources, and
combinations thereof.

7. The system of claim 1, wherein the RRM policy comprises,

weights ($W_{5QI}$, $W_{GBR}$, $W_{PDB}$, $W_{PF}$) used by a QoS scheduler as part of a Media Access Control (MAC) layer at the DU, where, $W_{5QI}$ is a weight for a priority metric corresponding to a 5G QoS Identifier (5QI) of the Logical Channel (LC), $W_{GBR}$ is a weight for a priority metric corresponding to a target bit rate of a corresponding LC, $W_{PDB}$ is a weight for a priority metric corresponding to a packet delay budget at the DU for a corresponding LC, and $W_{PF}$ is a weight for a priority metric corresponding to proportional fair metric of the UE;
parameters ($\alpha$, $\beta$) used by the scheduler, which influences Fairness of the RRM policy, where $\alpha$ and $\beta$ are configurable parameters and are used as fairness coefficients of the proportional fair metric used by the scheduler;
weights ($W_z$, $W_Z^d$) associated with slices, where $W_Z$ is a weight for a slice priority metric for slice z considering observed and required throughput for that slice, and $W_Z^d$ is a weight for slice priority metric taking into account delay requirements for delay sensitive DRBs in that slice;
resources limits of different types for each slice including, rRMPolicyDedicatedRatio, rRMPolicyMinRatio, and rRMPolicyMaxRatio;
frequency of flow control feedback from the DU to a CU User Plane (CU-UP) for each Data Radio Bearer (DRB) m corresponding to UE h in cell k (freqFCfeedbackDL(k,h,m));
frequency of midhaul error control feedback from the CU-UP to the DU for each DRB n (freqECfeedbackUL(k, h, n)) and sub-bands(k) for cell k for Frequency Selective Scheduling (FSS) and Coordinated Multipoint Transmission (CoMP), for slice z, UE h, DRB m (and n) are computed at the RRM-MO Optimization module using reinforcement learning, a feedback-based Machine Learning (ML) technique.

8. The system of claim 7, wherein state variables for a cluster of L cells is defined as:

$$SSS^{cluster} = (SSS_1^{cell}, \ldots, SSS_k^{cell}, \ldots, SSS_L^{cell})$$

and an action taken is defined as:

$$AAA^{cluster} = (AAA_1^{cell}, \ldots, AAA_k^{cell}, \ldots, AAA_L^{cell}),$$

where, $SSS_k^{cell}$ comprises state variables for cell k, for each slice z in that cell with active DRBs and for each DRB associated with each UE, and where

$$SSS_k^{cell} = \left\{ \begin{array}{c} S_k^{cell}, \\ \left(S_Z^{slice}(k) \text{for each slice z in cell k with active DRBs}\right), \\ \left(S_{h,m}^{UE,DRB}(k) \text{ for each active DRB m associated with UE h in cell k}\right) \end{array} \right\}$$

where, a set of actions, $AAA^{cluster}$, includes action on state variables for each cell in a cluster, for each slice in a cell, and for each DRB for a UE.

9. The system of claim 1, wherein the RRM-MO optimization module uses cost functions that are computed using the following:

- cellScenarioObservedThro(k, p) for UE distribution scenario p in cell k,
- ueObservedThro(k, r, h) for UE h in radio zone r in cell k,
- cellScenarioSpectrumEfficiency(k,p) for scenario p in cell k,
- cellQoS5QIObservedPerf(k,j) belonging to 5G QoS Identifier (5QI) j for which QoS requirements should be met in the cell k,
- cellSliceObservedPerf(k) for cell k,
- numDRBs(k) for cell k,
- trafficMix5QIObserved,
- sliceObservedThroViol(z,k) for slice z in cell k,
- sliceObservedDRBsDelayViol(z,k) for slice z in cell k,
- ueObservedDLAbr(k,h) for UE h in cell k,
- ueObservedULAbr(k,h) for UE h in cell k,
- numDRBsUE(k,h) for UE h in cell k,
- medianRLCWaitTime(k,h,m) for DRB m corresponding to UE h in cell k,
- medianPDCPWaitTime(k,h,m) for DRB m corresponding to UE h in cell k,
- sizeRLCQueue(k,h,m) for DRB m corresponding to UE h in cell k,
- sizePDCPQueue(k,h,m) for DRB m corresponding to UE h in cell k,
- R-DL-MH-PER(k,m, j) for DRB m corresponding to 5QI j in cell k,
- R-UL-MH-PER(k,m,j) for DRB m corresponding to 5QI j in cell k, and
- PER(k,m, j) for DRB m corresponding to 5QI j in cell k. To be computed in DL as well as UL direction.

10. The system of claim 1, wherein the RRM-MO optimization module takes an action (denoted as $AAA^{cluster}$) to increase or decrease or not change values of the following parameters:

- $W_{5QI}$, $W_{GBR}$, $W_{PDB}$, $W_{PF}$, $W_{BO}$, $\alpha$ and $\beta$ (related to the QoS scheduler at the DU)
- $Wz$, $W_Z^d$ (for each slice z with slice-aware scheduler at the DU),
- rRMPolicyDedicatedRatio, rRMPolicyMinRatio, rRMPolicyMaxRatio for slice-based resource reservation (at DU and CU),
- freqFCfeedbackDL(k,h,m) which is frequency of flow control feedback from DU to CU-UP for each DRB m corresponding to UE h in cell k,

- freqECfeedbackUL(k, h, n) wich is frequency of error correction feedback from CU-UP to DU for each DRB n for UE h in cell k, and
- sub-bands(k) for cell k.

11. The system of claim 1, wherein when the RRM-MO optimization module is hosted at the near-real time RIC server,

an RIC subscription procedure across an E2 interface between the near-real time RIC server and the DU is enhanced to communicate RRM parameters from the DU to the near-RT RIC server, and
the RIC subscription procedure across the E2 interface between the near-real time RIC server and the CU is enhanced to communicate RRM parameters from the CU to the near-RT RIC server,
wherein performance measurements are analyzed at the RRM-MO optimization module for each DRB, each UE, each slice and each cell.

12. The system of claim 1, wherein the RRM-MO optimization module uses cost functions that are computed using the following:

- cellScenarioObservedThro(k, p) for UE distribution scenario p in cell k,
- ueObservedThro(k, r, h) for UE h in radio zone r in cell k,
- cellScenarioSpectrumEfficiency(k,p) for scenario p in cell k,
- cellQoS5QIObservedPerf(k,j) belonging to 5G QoS Identifier (5QI) j for which QoS requirements should be met in the cell k,
- cellSliceObservedPerf(k) for cell k,
- numDRBs(k) for cell k,
- trafficMix5QIObserved,
- sliceObservedThroViol(z,k) for slice z in cell k,
- sliceObservedDRBsDelayViol(z,k) for slice z in cell k,
- ueObservedDLAbr(k,h) for UE h in cell k,
- ueObservedULAbr(k,h) for UE h in cell k,
- numDRBsUE(k,h) for UE h in cell k,
- medianRLCWaitTime(k,h,m) for DRB m corresponding to UE h in cell k,
- medianPDCPWaitTime(k,h,m) for DRB m corresponding to UE h in cell k,
- sizeRLCQueue(k,h,m) for DRB m corresponding to UE h in cell k,
- sizePDCPQueue(k,h,m) for DRB m corresponding to UE h in cell k,
- R-DL-MH-PER(k,m, j) for DRB m corresponding to 5QI j in cell k,
- R-UL-MH-PER(k,m,j) for DRB m corresponding to 5QI j in cell k, and
- PER(k,m, j) for DRB m corresponding to 5QI j in cell k computed in download (DL) and upload (UL) directions.

13. The system of Claim 12, wherein when the RRM-MO optimization module is hosted at the CU-UP, and the RRM policy computed at the CU-UP is communicated to the CU-CP by a modified E1AP protocol associated with the E1 interface and the RRM policy is communicated from the CU-CP to the DU by modifying an F1AP protocol associated with the F1-C interface.

14. The system of claim 1, wherein when the RRM-MO optimization module is hosted at the NWDAF server, wherein an F1AP protocol associated with an F1-C interface is modified to communicate the RRM parameters from the DU to a CU Control Plane (CU-CP), an E1AP protocol associated with an F1 interface is modified to communicate RRM parameters from a CU User Plane (CU-UP) to the CU-CP, an Next Generation Application Protocol (NGAP) protocol associated with an N2 interface is modified to communicate the RRM parameters from the CU-CP to an Access Mobility Function (AMF) and a subscription service offered by the NWDAF server is enhanced to allow the NWDAF server to subscribe to RRM parameters from the AMF.

15. The system of Claim 14, wherein the subscription service offered by NWDAF is modified to enable it to communicate RRM policy and selected parameters to the AMF, the NGAP protocol associated with the N2 interface is modified to communicate the RRM policy from the AMF to the CU-CP and the F1AP protocol associated with the F1-C interface is modified to communicate the RRM policy from the CU-UP to the DU.

Prior Art

FIG. 1A

Prior Art

FIG. 1B

Prior Art

FIG. 2

Prior Art

FIG. 3

Prior Art

FIG. 4

## Prior Art

**FIG. 5**

Prior Art

FIG. 6

Prior Art

FIG. 7

Prior Art

FIG. 8

Prior Art

FIG. 9

Prior Art

| 101<br>UE x | 102<br>gNodeB (RU, DU, CU) | 903<br>UPF | 9011a<br>DNN<br>(e.g. for internet services) |

PDU Session I for UE x, Slice id s1 (SST, SD)

| DRB y1 | NG-U: GTP-U tunnel for PDU session 1<br>QFI q1 (with 5QI h1 for non-GBR) | IP Flows |

QFI q2 (with 5QI h2 for non-GBR)

| DRB y2 | | | 9011b<br>DNN<br>(for IMS<br>services) |

QFI q3 (with 5QI h3 for GBR)

PDU Session II for UE x. Slice id s2

| DRB z1 | NG-U: GTP-U tunnel for PDU session 2 |

QFI q4 (with 5QI h4 for GBR)

QFI q5 (with 5QI h5 for GBR)

DNN: Data Network Name, QFI: QoS Flow Identifier, UPF: User Plane Function (of 5G Core), 5QI: 5G QoS Identifier, DRB: Data Radio Bearer, GBR: Guaranteed Bit Rate, SST: Slice / Service Type, SDD: Slice Differentiator

FIG. 10

EP 4 648 463 A1

Prior Art

⬇ Downlink (DL) IP packets

903  UPF (as part of 5G core network)

One GTP-U tunnel per
PDU session between UPF and CU-UP

(e.g. 10s or 100s of thousands of
PDU sessions and DRBs per CU-UP)

504
SDAP at CU-UP: QoS
flows mapped to DRBs

PDU
Session 1

PDU
Session 2

304b  CU-UP:
SDAP,
PDCP

One GTP-U tunnel per
DRB between CU-UP and DU

DRB1      DRB2          DRB3
DRB4

(e.g. Thousands of DRBs per DU)

305

DU: RLC,
    MAC,
    PHY (upper parts)

1001   MAC Scheduler

One (logical) RLC queue per DRB
(or per logical channel)

PHY (upper parts)

306   RU

101

| UE x1 | UE x2 | UE x3 | | UE xm | UE xn |

FIG. 11

39

Prior Art

FIG. 12

Prior Art

Slice SLA

NSI (Network Slice Instance)

5GCore NSSI    Transport Network NSSI

RAN NSSI (Network Subnet Slice Instance)

RRMPolicyManagedEntity

RAN Domain

5G Core Network
Domain

Transport Network
Domain

FIG. 13

Prior Art

<<ProxyClass>>
RRMPolicyManagedEntity

Represents the following IOCs:
NRCellCU, NRCellDU,
GNBCUUPFunction, GNBCUCPFunction,
GNBDUFunction

1    <<names>>

<<InformationObjectClass>>
RRMPolicy_

NRM Fragment for RRM Policies

<<InformationObjectClass>>
Top

<<InformationObjectClass>>
RRMPolicy_

- resourceType (e.g. PRBs, PDU sessions etc.)
- rRMPolicyMemberList (network slice or group
of slices that use this RRM policy)

<<InformationObjectClass>>
RRMPolicyRatio

- rRMPolicyMaxRatio
- rRMPolicyMinRatio
- rRMPolicyDedicatedRatio

FIG. 14

Prior Art

Shared resources: Shared among slices with no specific guarantees per slice

Prioritized resources: Guaranteed for use by specific slices but other slices can use these if available (i.e. when the slices for which these are prioritized are not using these)

Dedicated resources: Dedicated resources for the associated slices

FIG. 15

Prior Art

node hosting NR PDCP → corresponding node

DL USER DATA

**FIG. 16A**

node hosting NR PDCP ← corresponding node

DL DATA DELIVERY STATUS

**FIG. 16B**

Prior Art

Agent

FIG. 17

Prior Art

1801   Initialize the Q-table

1802   Select an action to perform

1803   Perform the selected action

1804   Find the associated cost

1805   Update the Q-table

FIG. 18

Near-RT-RIC
RRM-MO
Optimization
xApp

E2 node

RL

E2 SETUP REQUEST

E2 SETUP RESPONSE

RIC SUBSCRIPTION REQUEST (Event Trigger definition, Sequence of Actions,
[Action id, Action Type: REPORT / INSERT / CONTROL], Action Definition)

RIC SUBSCRIPTION RESPONSE

RIC INDICATION (with parameters subscribed from the E2 node)

State

RL Policy

RIC CONTROL REQUEST (with specific Policy by RRM-MO)

RIC CONTROL ACKNOWLEDGE

RIC INDICATION (with parameters subscribed from the E2 node)

State, Cost

RL Policy

RIC CONTROL REQUEST (with specific Policy by RRM-MO)

FIG. 19

FIG. 20

FIG. 21

Europäisches
Patentamt

European
Patent Office

Office européen
des brevets

# EUROPEAN SEARCH REPORT

**Application Number**

EP 25 17 4793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | WO 2023/283102 A1 (INTEL CORP [US])<br>12 January 2023 (2023-01-12)<br>* paragraph [0016] - paragraph [0050] *<br>* paragraph [0144] - paragraph [0148] *<br>* figures 1,2,3,4 *<br>----- | 1,3-6,<br>11,13<br>2<br>7-10,12,<br>14,15 | INV.<br>H04W24/02<br><br>ADD.<br>H04W28/16<br>H04W88/08 |
| Y | WO 2023/091664 A1 (INTEL CORP [US])<br>25 May 2023 (2023-05-25)<br>* paragraph [0020] - paragraph [0023] *<br>* figure 3b *<br>----- | 2 | H04W88/12<br>H04W88/18<br>H04L41/0894 |
| X,P | EP 4 510 520 A1 (MAVENIR SYSTEMS INC [US])<br>19 February 2025 (2025-02-19)<br>* paragraph [0002] - paragraph [0016] *<br>* paragraph [0041] - paragraph [0059] *<br>* figures 4, 5A, 9, 10, 11, 12, 20-25 *<br>----- | 1-15 | |
| E | EP 4 598 102 A1 (MAVENIR SYSTEMS INC [US])<br>6 August 2025 (2025-08-06)<br>* paragraph [0002] - paragraph [0019] *<br>* paragraph [0051] - paragraph [0056] *<br>* figures 3, 4, 8, 9, 10, 11, 13, 14 *<br>----- | 1-15 | |

**TECHNICAL FIELDS SEARCHED (IPC)**

H04W
H04L

The present search report has been drawn up for all claims

| Place of search | Date of completion of the search | Examiner |
|---|---|---|
| Munich | 26 September 2025 | Ruscitto, Alfredo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 17 4793

This annex lists the patent family members relating to the patent documents cited in the above-mentioned European search report.
The members are as contained in the European Patent Office EDP file on
The European Patent Office is in no way liable for these particulars which are merely given for the purpose of information.

26-09-2025

| Patent document cited in search report | Publication date | Patent family member(s) | Publication date |
|---|---|---|---|
| WO 2023283102 A1 | 12-01-2023 | US 2024305533 A1 | 12-09-2024 |
| | | WO 2023283102 A1 | 12-01-2023 |
| WO 2023091664 A1 | 25-05-2023 | CN 117897980 A | 16-04-2024 |
| | | EP 4434252 A1 | 25-09-2024 |
| | | US 2024259879 A1 | 01-08-2024 |
| | | WO 2023091664 A1 | 25-05-2023 |
| EP 4510520 A1 | 19-02-2025 | NONE | |
| EP 4598102 A1 | 06-08-2025 | NONE | |

EPO FORM P0459